# EUROPEAN PATENT APPLICATION

(11) **EP 3 214 808 A1**
(43) Date of publication of application: **06.09.2017**
(21) Application number: 15854808.1
(22) Date of filing: 30.10.2015
(51) Int. Cl.: H04L 12/827, H04L 12/66

(54) **GATEWAY APPARATUS AND METHOD OF CONTROLLING GATEWAY APPARATUS**

(30) Priority: 31.10.2014 JP 2014222442
(71) Applicant: NEC Corporation, Minato-ku Tokyo 108-8001 (JP)
(72) Inventor: OSUGA, Toru, Tokyo 108-8001 (JP); NOBUKIYO, Takahiro, Tokyo 108-8001 (JP)
(74) Representative: Mathys & Squire LLP
(86) International application number: PCT/JP2015/080784
(87) International publication number: WO 2016/068308

(57) **Abstract**

There is provided a gateway apparatus capable of forwarding a packet(s) in which packet information is set between a plurality of apparatuses using protocols in different layers. The gateway apparatus is arranged in a core network in a mobile wireless communication system and is connected to a different network other than the core network as a gateway. The gateway apparatus includes: extraction means for extracting first information set in a first packet(s) that has been received from a relay apparatus relaying a packet(s) between the gateway apparatus and a wireless terminal or from a node arranged in the different network; setting means for setting, based on the first information, second information in a second packet(s) in a protocol(s) in a layer(s) different from a layer(s) of a protocol(s) of the first packet(s); and forwarding means for forwarding the second packet(s) in which the second information is set to the node or to the relay apparatus.

## Description

### [TECHNICAL FIELD]

The present invention relates to a gateway apparatus and a control method thereof.

### [BACKGROUND]

More and more users are enjoying distributed information based on rich media by using their mobile terminals anytime and anywhere, thanks to the recent improvement in the line volume of the Internet and in the component technology for handling a variety of media information. As such lifestyle has become widely common, the use of a mobile wireless communication system such as LTE (Long Term Evolution) or LTE-A (LTE Advanced) has also become widespread and is continuously spreading, as a high-speed mobile environment supporting the information distribution.

In this high-speed mobile wireless communication system environment such as LTE, to manage the impact of the band variation (change in communication quality) that occurs in a wireless area between a wireless terminal (User Equipment (UE)) and a radio base station (eNodeB), a large-capacity buffer(s) is arranged in the radio base station in LTE. In addition, an ARQ (Automatic Repeat reQuest) technique is used in the RLC (Radio Link Control) layer (termed sublayer, too), and an HARQ (Hybrid ARQ) technique is used in the MAC (Media Access Control) layer. By using these techniques, for example, even when the communication quality in the wireless area deteriorates and a bit error occurs, retransmission processing can be performed in these lower layers, and data can be restored to some extent. Namely, the need of retransmission processing in the layers higher than the network layer is reduced.

On the other hand, in TCP (Transmission Control Protocol), which is a transport layer protocol widely used in both wired and wireless data communications, as typified by CUBIC TCP (NPL 1) and TCP NewReno (NPL 2), a loss-based congestion control method is often adopted. In this method, when packet loss is detected, occurrence of a congestion (network congestion) is determined, and the transmission rate is lowered. However, in recent mobile communication techniques, as described above, there is an attempt to absorb the impact of the band variation (change in communication quality) that occurs in the wireless area by the ARQ processing, the HARQ processing, etc. in the radio base station. Namely, such band variation that occurs in the wireless area is difficult to detect in TCP. Thus, when the loss-based congestion control is applied to a mobile wireless communication system such as LTE, the transmission server continues to increase the congestion window size (cwnd) since a transmission server cannot detect a congestion until a large-capacity buffer in the radio base station overflows and packet loss occurs. Namely, the communication quality of the corresponding wireless area remains poor while the transmission server continues to increase the congestion window size. As a result, the network congestion is worsened. Thus, there is a demand for a method of controlling the transmission speed at an early stage before an excessive amount of data would flow into the network.

There have conventionally been proposed some methods of controlling the transmission speed at an early stage before an excessive amount of data flows into the network. NPLs 3 to 5 discuss methods in which a network apparatus such as a router detects a congestion at an early stage and notifies a transmission server of the congestion.

In NPL 3, two different levels of thresholds min and max are previously set. When the average size of a queue persisting in a network apparatus is equal to or larger than min and less than max, packets are dropped according to probability, while on the other hand, when the average size is equal to or larger than max, all the packets are dropped. Thereby, a transmission server is notified of a congestion by causing packet loss at an early stage.

In NPL 4, a queuing delay caused by a queue persisting in a network apparatus is monitored, and based on the variation of the monitored queuing delay, determination is performed as to whether the queue is a good queue useful for absorbing the variation in the band and delay or a bad queue which needlessly persists in the network apparatus. If the queue is determined to be a bad queue, a packet(s) is dropped, whereupon, a transmission server is notified of a congestion by causing packet loss at an early stage.

The technique discussed in NPL 5 is an improved version of the technique discussed in NPL 3. In NPL 5, instead of dropping a packet(s), a flag for notifying a transmission server of a detected congestion is added in the TCP header and the IP (Internet Protocol) header of an individual one of the packet(s). In this way, the transmission server is notified of the congestion without causing packet loss.

### [CITATION LIST]

### [NON-PATENT LITERATURE]

NPL 1: S. Ha, I. Rhee, and L. Xu, "CUBIC: A New TCP-Friendly High-Speed TCP Variant," In Proc. of ACM SIGOPS, vol.42, no.5, pp.64-74, New York, NY, USA, Jul. 2008
NPL 2: S. Floyd and T. Henderson, "The NewReno Modification to TCP's Fast Recovery Algorithm," RFC 2582, Apr. 1999
NPL 3: S. Floyd and V. Jacobson, "Random Early Detection Gateways For Congestion Avoidance," IEEE/ACM Transactions on Networking, vol.1, no.4, pp.397-413, Aug. 1993
NPL 4: K. Nichols and V. Jacobson, "Controlling Queue Delay," ACM Queue, vol.10, no.5, pp.20-34, May 2012
NPL 5: K. Ramakrishnan, S. Floyd, D. Black, "The Addition of Explicit Congestion Notification (ECN) to IP," RFC 3168, Sep. 2001

### [SUMMARY]

### [TECHNICAL PROBLEM]

However, the methods in NPLs 3 to 5 are insufficient for mobile wireless communication systems such as LTE.

Since NPLs 3 and 4 are techniques in which the transmission server using TCP is notified of a congestion by causing packet loss, various problems could occur. For example, more acknowledgement (ACK) packets are transmitted due to packet loss, and retransmission is performed due to lost packets. As a result, the traffic flowing on the network is increased. Since an efficient use of radio resources is demanded particularly in the mobile communication techniques, these methods that cause unnecessary traffic cannot be regarded effective solutions.

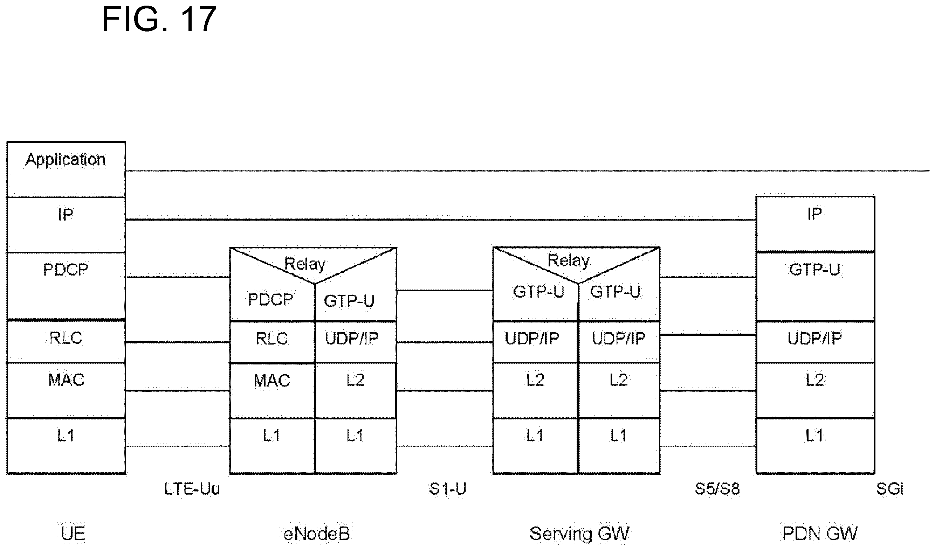

In addition, according to the technique in NPL 5, since a flag for notification of a congestion is added in the TCP header and the IP header, nodes and environments having no function of performing processing in the TCP and IP layers cannot use this technique. A case in which such problem occurs in an LTE system will be described with reference to Fig. 17. Fig. 17 illustrates a protocol stack between a UE (User Equipment, corresponding to a wireless terminal) and a P-GW (PDN (Packet Data Network) Gateway) on the U-Plane (User Plane) in LTE (3GPP TS23.401 v12.5.0 (2014-6) 5.1.2.1 UE-PGW user plane with E-UTRAN). In a case where an IP packet(s) (and a TCP packet(s) held in an IP packet(s)) in TCP/IP, which is protocol of an upper layer, is transmitted through an eNodeB (a radio base station), an S-GW (Serving GW), and the like, the IP packet(s) is encapsulated by GTP-U (GPRS (General Packet Radio Service) Tunneling Protocol for User plane), and the eNodeB and the S-GW do not have a function of terminating TCP and IP. Therefore, even if the eNodeB or the S-GW detects any change in a congestion state or a communication quality state on a predetermined network, neither the eNodeB nor the S-GW can set information about this network state change in a TCP header of a packet or IP header thereof, which is an upper layer (in protocol stack) than GTP-U, and notify a server or the like as transmission source that has transmitted the corresponding TCP packet(s) of the information.

### [Object of the present invention]

The present invention has been made in view of the above problems, and it is an object of the present invention to provide a gateway apparatus, etc. capable of setting information about a change of a network state, etc. in a packet(s) as packet information and forwarding the packet(s) in which the packet information is set between a plurality of apparatuses that use protocols in different layers.

### [SOLUTION TO PROBLEM]

According to a first aspect of the present invention, there is provided a gateway apparatus, which is arranged in a core network in a mobile wireless communication system and is connected to a different network other than the core network as a gateway, the gateway apparatus, including: extraction means for extracting, from a first packet(s), first information set in a first packet(s) that has been received from a relay apparatus relaying a packet(s) between the gateway apparatus and a wireless terminal or from a node arranged in the different network; setting means for setting, based on the first information, second information in a second packet(s) in a protocol(s) in a layer(s) different from a layer(s) of a protocol(s) of the first packet(s); and forwarding means for forwarding the second packet(s) in which the second information is set to the node or to the relay apparatus.

According to a second aspect of the present invention, there is provided a method of controlling a gateway apparatus which is arranged in a core network in a mobile wireless communication system and is connected to a different network other than the core network as a gateway, the method, comprising steps of: extracting first information set in a first packet(s) that has been received from a relay apparatus relaying a packet(s) between the gateway apparatus and a wireless terminal or from a node arranged in the different network; setting, based on the first information, second information in a second packet(s) in a protocol(s) in a layer(s) different from a layer(s) of a protocol(s) of the first packet(s); and forwarding the second packet(s) in which the second information is set to the node or to the relay apparatus.

### [ADVANTAGEOUS EFFECTS OF INVENTION]

According to the present invention, there is provided a gateway apparatus, etc. capable of setting information about a change of a network state, etc. in a packet(s) as packet information and forwarding the packet(s) in which the packet information is set between a plurality of apparatuses that use protocols in different layers.

### [BRIEF DESCRIPTION OF THE DRAWINGS]

[Fig. 1]

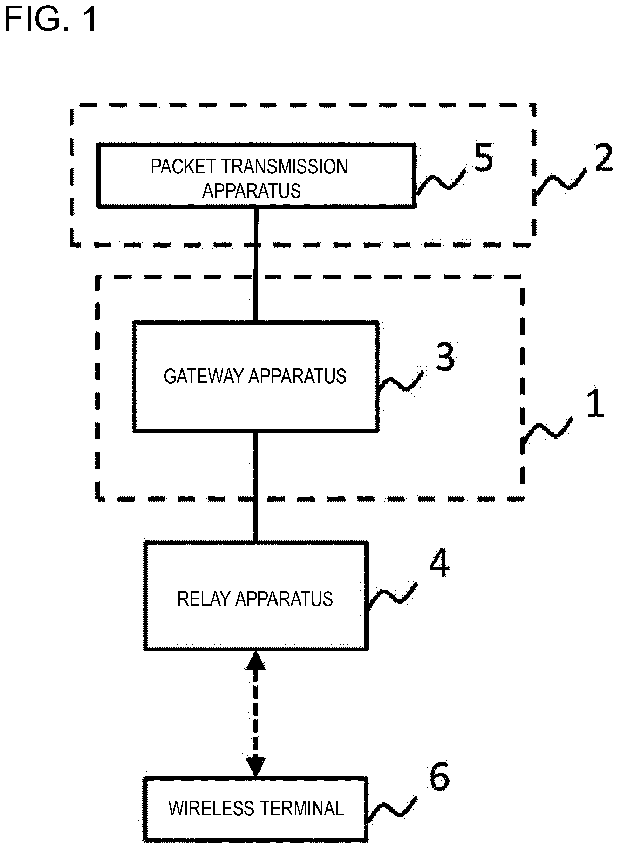

   Fig. 1 illustrates a configuration example of a communication system according to a first exemplary embodiment.
[Fig. 2]

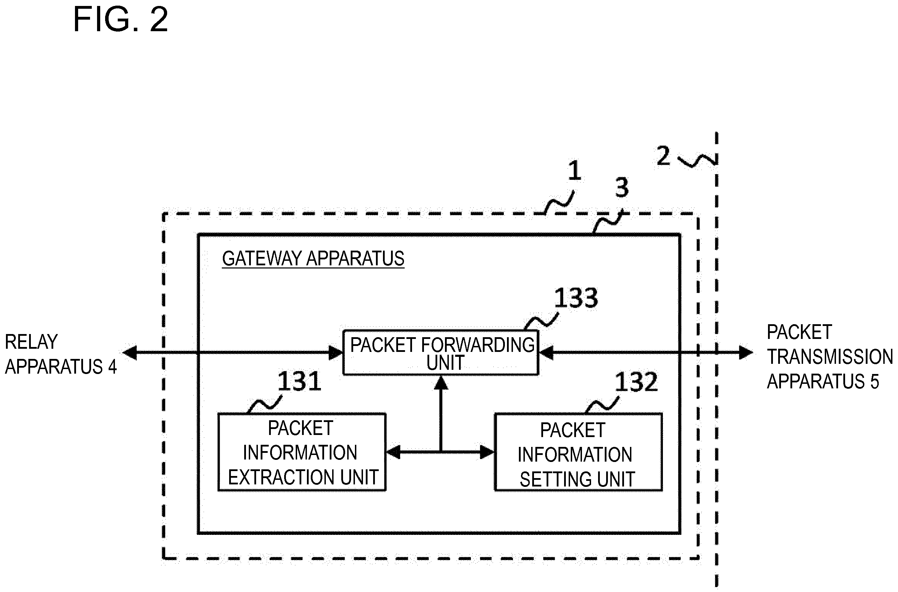

   Fig. 2 is a block diagram illustrating a configuration example of a gateway apparatus according to the first exemplary embodiment.
[Fig. 3]

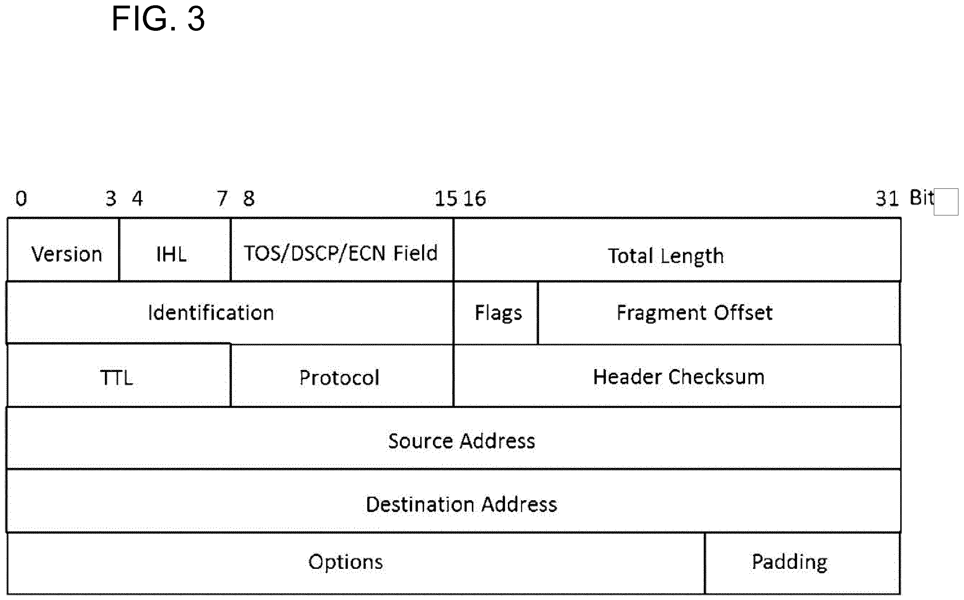

   Fig. 3 illustrates a configuration example of an IP header.
[Fig. 4]

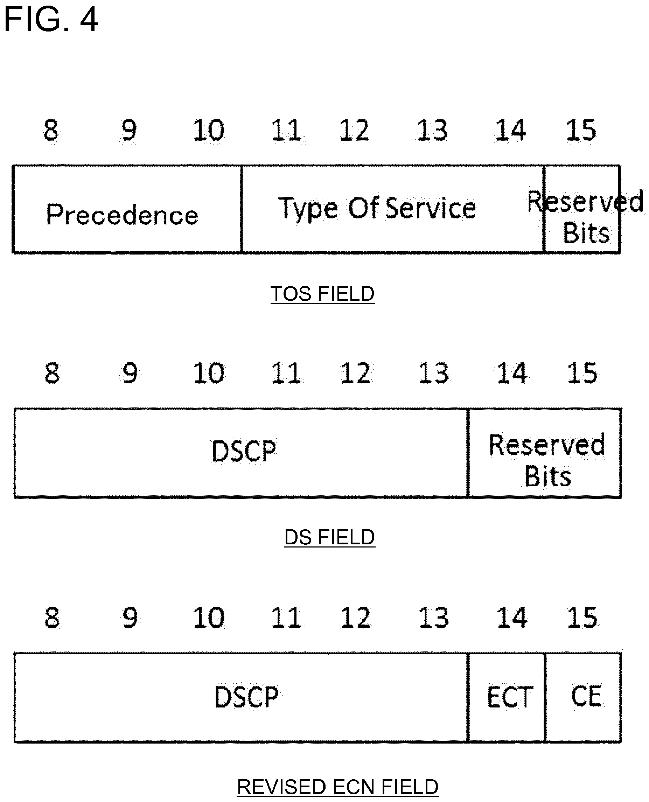

   Fig. 4 illustrates a configuration example of a TOS/DSCP/ECN field, which is a part of the IP header.
[Fig. 5]

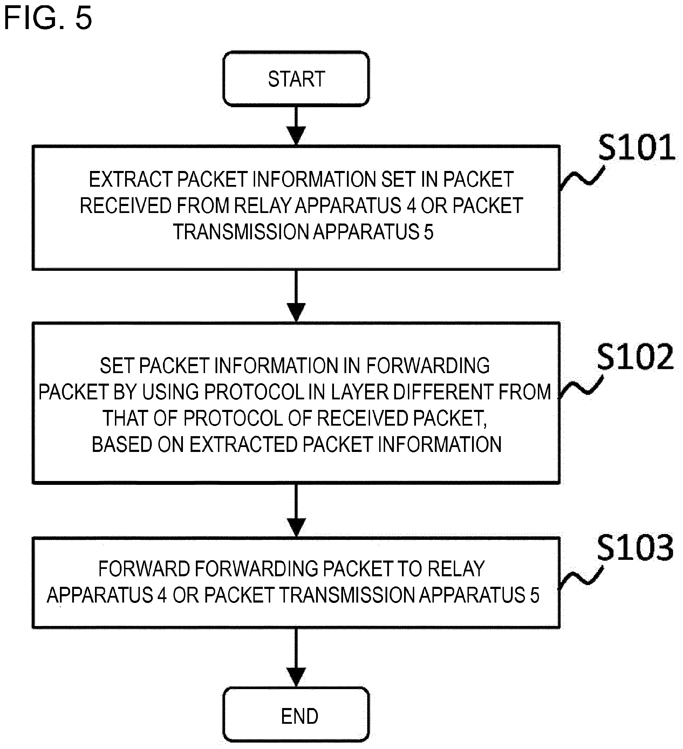

   Fig. 5 is a flowchart illustrating an operation example of the gateway apparatus according to the first exemplary embodiment.
[Fig. 6]

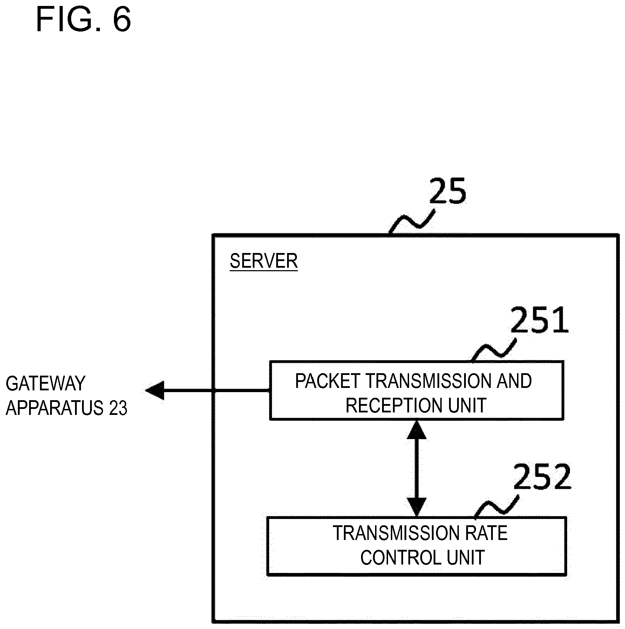

   Fig. 6 is a block diagram illustrating a configuration example of a server according to a second exemplary embodiment.
[Fig. 7]

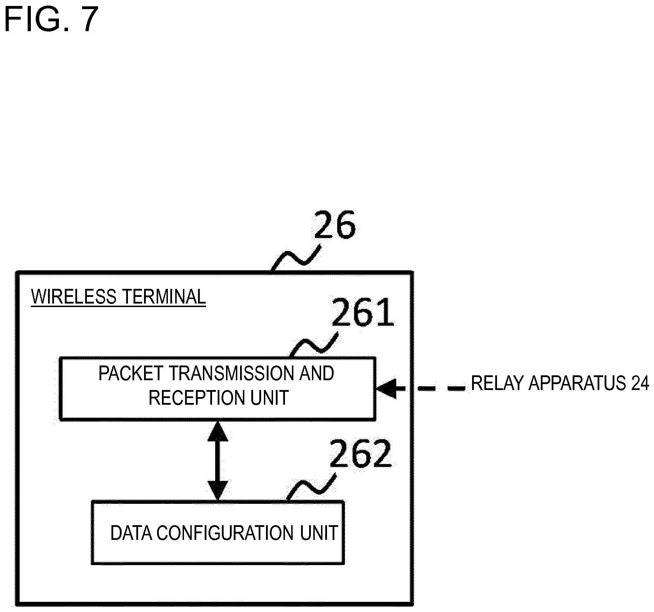

   Fig. 7 is a block diagram illustrating a configuration example of a wireless terminal according to the second exemplary embodiment.
[Fig. 8]

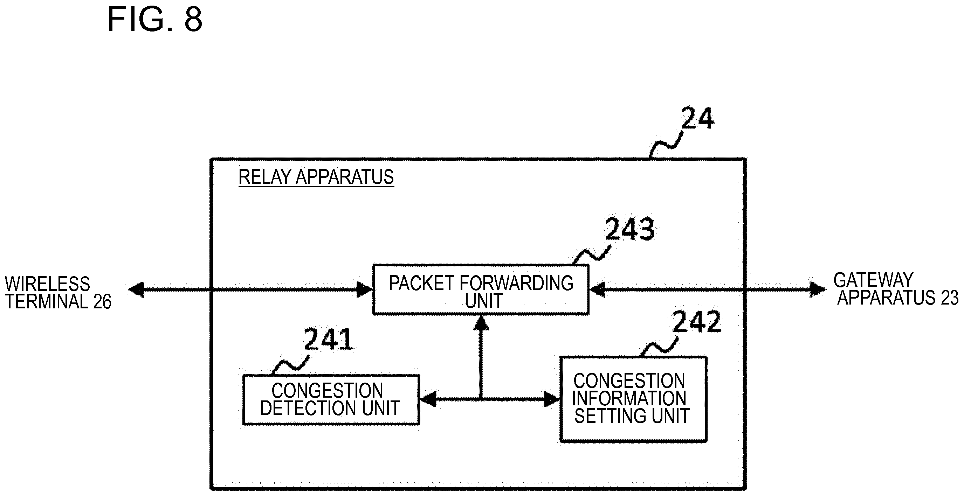

   Fig. 8 is a block diagram illustrating a configuration example of a relay apparatus according to the second exemplary embodiment.
[Fig. 9]

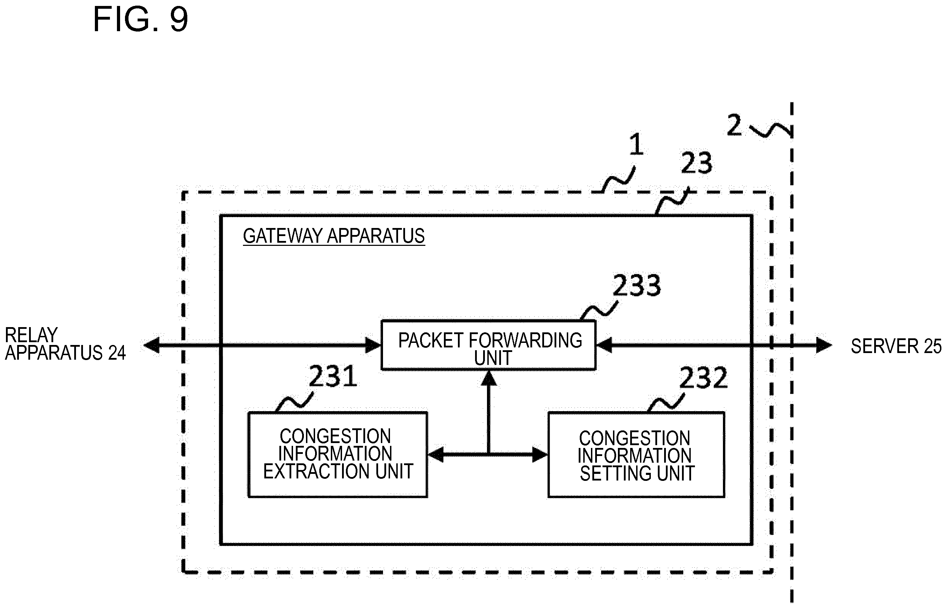

   Fig. 9 is a block diagram illustrating a gateway apparatus according to the second exemplary embodiment.
[Fig. 10]

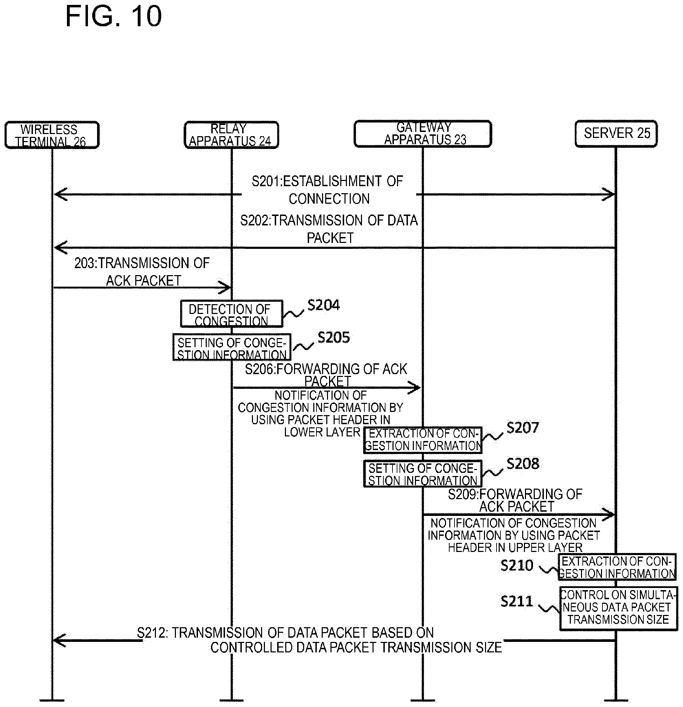

   Fig. 10 is a sequence diagram illustrating an operation example of a communication system according to the second exemplary embodiment.
[Fig. 11]

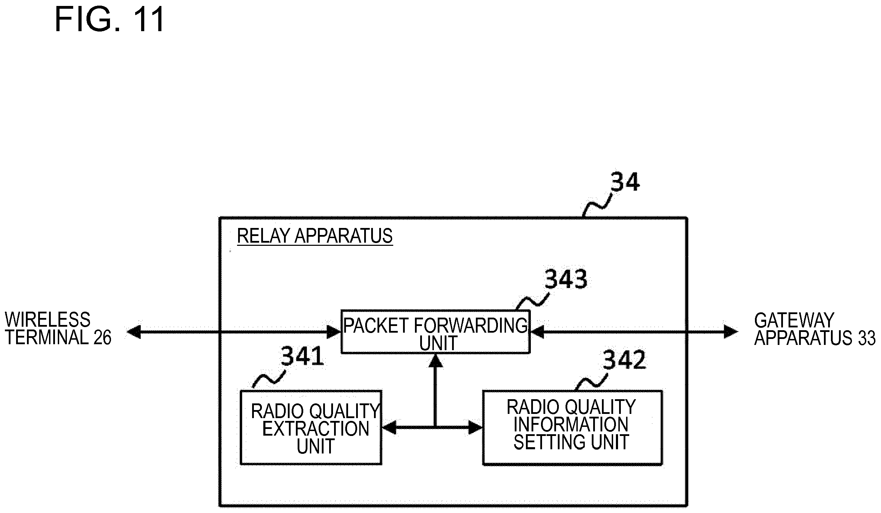

   Fig. 11 is a block diagram illustrating a configuration example of a relay apparatus according to a third exemplary embodiment.
[Fig. 12]

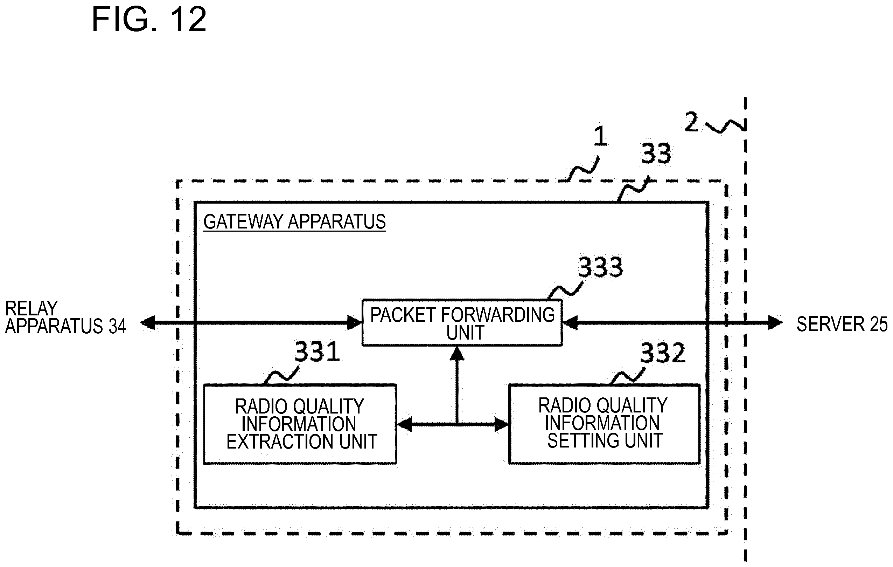

   Fig. 12 is a block diagram illustrating a configuration example of a gateway apparatus according to the third exemplary embodiment.
[Fig. 13]

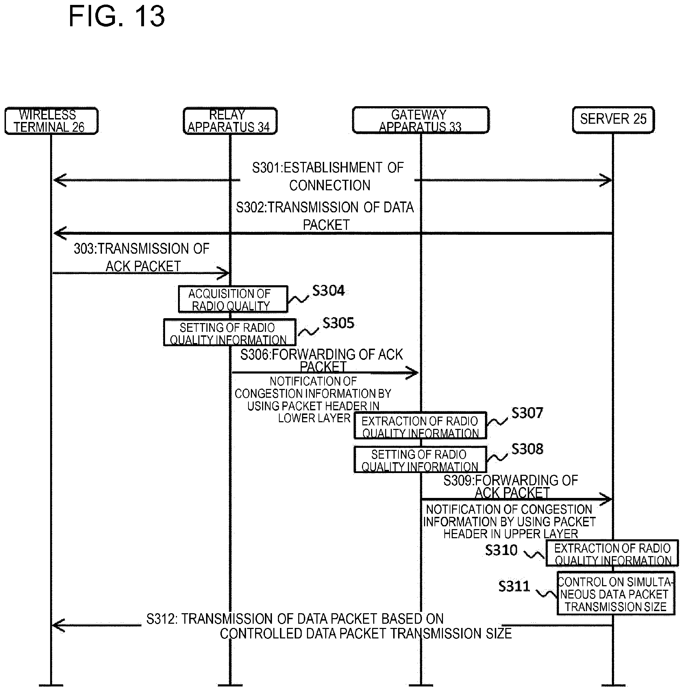

   Fig. 13 is a sequence diagram illustrating an operation example of a communication system according to the third exemplary embodiment.
[Fig. 14]

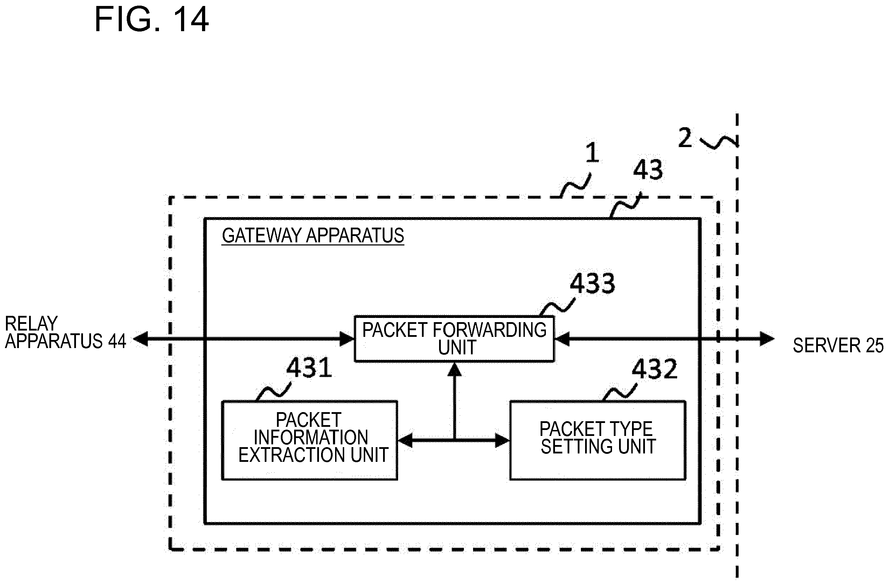

   Fig. 14 is a block diagram illustrating a configuration example of a gateway apparatus according to a fourth exemplary embodiment.
[Fig. 15]

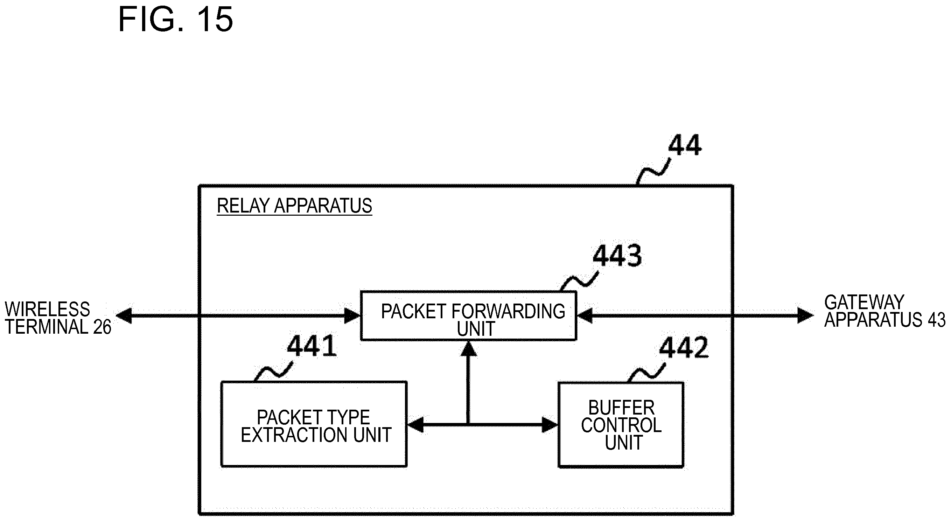

   Fig. 15 is a block diagram illustrating a configuration example of a relay apparatus according to the fourth exemplary embodiment.
[Fig. 16]

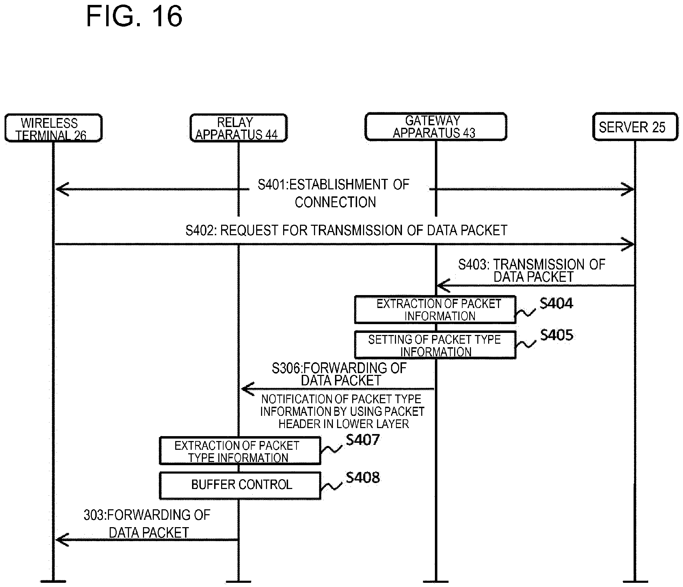

   Fig. 16 is a sequence diagram of an operation example of a communication system according to the fourth exemplary embodiment.
[Fig. 17]
   Fig. 17 illustrates a protocol stack between a UE and a P-GW on the U-Plane in the E-UTRAN.

### [DESCRIPTION OF EMBODIMENTS]

Hereinafter, exemplary embodiments according to the present invention will be described in detail with reference to the drawings. In the following drawings, like reference characters refer to like elements, and redundant description will be omitted unless needed for clarification.

### <First exemplary embodiment>

### [Configuration]

Fig. 1 illustrates a configuration example of a communication system according to a first exemplary embodiment of the present invention. At least a part of the present communication system includes a wireless communication system. In the present exemplary embodiment, LTE is used as an example of the wireless communication system. In addition, a protocol stack in Fig. 17 will be referred to, as needed. As illustrated in Fig. 1, the communication system according to the present exemplary embodiment includes a core network 1 and a neighboring network 2 that neighbors the core network 1. Another network may be arranged between the core network 1 and the neighboring network 2.

The core network 1 includes at least a gateway apparatus 3. In addition, the core network 1 may include a relay apparatus 4 and a different apparatus(es). The neighboring network 2 includes at least a packet transmission apparatus 5. The neighboring network 2 may include an apparatus(es) other than the packet transmission apparatus 5. For example, the neighboring network 2 is a wide area network (WAN) such as an IP network. However, the neighboring network 2 is not limited to such example. For example, the neighboring network 2 may be a core network using RAT (Radio Access Technology) different from that of the core network 1.

The gateway apparatus 3 is arranged in the core network 1, connected to the neighboring network 2, and serves as a gateway in the core network 1. Namely, the gateway apparatus 3 performs packet forwarding between a different apparatus(es) in the core network 1 and an apparatus(es) in the neighboring network 2 by using a predetermined protocol(s). The present exemplary embodiment will be described assuming that the gateway apparatus 3 is a P-GW, as a suitable example. However, the present exemplary embodiment is not limited to such example. For example, the gateway apparatus 3 may be an S-GW.

The relay apparatus 4 relays packets between the gateway apparatus 3 and a wireless terminal 6. More specifically, the relay apparatus 4 receives packets from the gateway apparatus 3 directly or via another apparatus and transmits the received packets to the wireless terminal 6. In addition, the relay apparatus 4 receives packets from the wireless terminal 6 directly or via another apparatus and transmits the received packets to the gateway apparatus 3.

The present exemplary embodiment will be described assuming that the relay apparatus 4 is a radio base station such as an eNodeB, as a suitable example. However, the relay apparatus 4 may be a different apparatus. For example, the relay apparatus 4 may be an S-GW or an MME (Mobility Management Entity). Namely, the relay apparatus 4 may be an apparatus arranged in the core network 1.

When the relay apparatus 4 is a radio base station, examples of the different apparatus include an S-GW and an MME. When the relay apparatus 4 is an S-GW or an MME, the different apparatus may be a radio base station.

The packet transmission apparatus 5 is arranged in the neighboring network 2. In other words, the packet transmission apparatus 5 is a node arranged in the neighboring network 2. The packet transmission apparatus 5 establishes a connection and a session with the wireless terminal 6 by using an upper layer such as TCP. The packet transmission apparatus 5 receives packets transmitted from the wireless terminal 6 via the gateway apparatus 3 or the like and transmits packets to the wireless terminal 6 via the gateway apparatus 3 or the like.

The present exemplary embodiment will be described assuming that the packet transmission apparatus 5 is a source server that holds data such as contents and delivers the data in response to a request from a user, as a suitable example. However, the present exemplary embodiment is not limited to such example. For example, the packet transmission apparatus 5 may be a cache server, a proxy server, an edge server, or the like. Namely, the packet transmission apparatus 5 may be a relay server apparatus that is arranged in the neighboring network 2 and that once terminates data communication between a source server and the wireless terminal 6 or may be a wireless terminal other than the wireless terminal 6.

The wireless terminal 6 transmits packets to the packet transmission apparatus 5 via the relay apparatus 4 such as a radio base station and the gateway apparatus 3. In addition, the wireless terminal 6 receives packets from the packet transmission apparatus 5 via the gateway apparatus 3 and the relay apparatus 4 such as a radio base station. The wireless terminal 6 performs wireless communication with a radio base station(s). Namely, at least a part of the communication channel between the wireless terminal 6 and the relay apparatus 4 includes a radio channel. As described above, the relay apparatus 4 may be a radio base station. In such case, the communication channel between the wireless terminal 6 and the relay apparatus 4 is a radio communication channel. Examples of the wireless terminal 6 include a mobile telephone, a smartphone, and a PC (Personal Computer) having a radio function.

Fig. 2 is a block diagram illustrating a configuration example of the gateway apparatus 3 according to the present exemplary embodiment. In Fig. 2, the gateway apparatus 3 includes a packet information extraction unit 131 as extraction means, a packet information setting unit 132 as setting means, and a packet forwarding unit 133 as forwarding means. Among the function blocks included in the gateway apparatus 3, Fig. 2 illustrates only a few of the constituent elements. Namely, the gateway apparatus 3 also includes a function block(s) (not illustrated) for causing the gateway apparatus 3 to function as a gateway.

The packet information extraction unit 131 extracts packet information set in a received packet, which is a packet that has been received from the relay apparatus 4 or the packet transmission apparatus 5. As a specific example, a case in which the gateway apparatus 3 has received a packet from the relay apparatus 4 will be described. The gateway apparatus 3 receives a packet from the relay apparatus 4 by using at least GTP-U and UDP/IP, which is a lower layer protocol than GTP-U. Thus, the packet information extraction unit 131 extracts packet information set by the relay apparatus 4 in the header of the packet (the received packet) in GTP-U or UDP/IP, which is a lower protocol than GTP-U. Next, as a specific example, a case in which the gateway apparatus 3 has received a packet from the packet transmission apparatus 5 will be described. The gateway apparatus 3 receives a packet from the packet transmission apparatus 5 by using IP, which is an upper layer protocol at least than GTP-U. Thus, the packet information extraction unit 131 extracts packet information set by the packet transmission apparatus 5 in the header of the packet (the received packet) in IP, which is an upper protocol than GTP-U, or TCP, which is an upper protocol than IP, for example.

The packet information is information that is set at least in a header portion or a payload portion of a packet. Examples of the packet information include information about a congestion state and communication quality in a predetermined network, packet type information indicating a type of an individual packet, and a packet identifier. Namely, the packet information is information set in a packet and is not limited to information indicating a type or a feature of an individual packet.

For example, the predetermined network is at least any one of a wireless network between a radio base station and a wireless terminal(s) and a wired network such as a core network. For example, the congestion state may be at least one of the following states: a state in which the volume of packets accumulated in a buffer included in the relay apparatus 4 such as a radio base station exceeds a predetermined threshold; a state in which the traffic inputted to the relay apparatus 4 (for example, the total volume of packets inputted within a predetermined period of time) exceeds the band of a communication channel used for output; and a state in which the total volume of packets inputted and outputted exceeds the throughput of the relay apparatus 4. For example, the communication quality may be at least one of the following items of information: the communication throughput; the transmission delay time; the transmission capacity; the total communication time; the error rate; the transmission loss; the number of occurrences of communication disconnection; and the radio quality. For example, the radio quality may be at least one of the following items of information: SINR (Signal to Interference plus Noise Ratio); CQI (Channel Quality Indicator); RSSI (Received Signal Strength Indicator); ASU (Arbitrary Strength Unit); RSRP (Reference Signal Received Power); and RSRQ (Reference Signal Received Quality).

The packet type information is information indicating a type of an individual packet. For example, the packet type information is information indicating whether the corresponding packet is an initially transmitted TCP packet or a retransmitted TCP packet or information indicating whether the TCP packet is a prefetched packet. Further, the packet type information may be information indicating whether the corresponding packet is a SYN packet, a SYN-ACK packet, or the like needed in a procedure (3-way handshake) for establishing a TCP connection. For example, the packet type information may be information indicating whether the corresponding packet is a FIN packet, a FIN-ACK packet, or the like needed in a procedure for terminating a TCP connection. Prefetch is a function of reading data in a cache memory in advance. For example, in the case of viewing an Internet site using a browser, prefetch is a function of previously reading data in an area expected to be displayed in the future by scrolling to a memory while the data is not currently displayed on the screen. When a packet has been read in response to a prefetch request, a packet type indicating that the packet has been prefetched can be set, for example.

For example, the packet identifier is a number (a packet identification number) added for identification of the corresponding packet. A specific example of the packet identifier is a TCP sequence number (SN) allocated to a packet.

Based on the extracted packet information, the packet information setting unit 132 sets packet information in a forwarding packet in a protocol in a layer different from the layer of the protocol of the received packet. For example, if the gateway apparatus 3 receives a packet from the relay apparatus 4, the packet information setting unit 132 sets packet information in the header of an IP packet, which is in a layer different from those of GTP-U and UDP/IP used to receive the packet. If the gateway apparatus 3 receives a packet from the packet transmission apparatus 5, the packet information setting unit 132 sets packet information in the header in a GTP-U packet or a UDP/IP packet in a layer different from that of the IP used to receive the packet. The packet information setting unit 132 may set the same packet information as that extracted by the packet information extraction unit 131 or may set packet information based on the extracted packet information. In addition, the packet information setting unit 132 may set packet information in a packet obtained by encapsulating or decapsulating the received packet. The packet in which the packet information setting unit 132 sets packet information is a packet (a forwarding packet) to be forwarded by the packet forwarding unit 133.

The packet information extraction unit 131 and the packet information setting unit 132 may have a DPI (Deep Packet Inspection) function. The DPI function is a function of reading (inspecting) the payload (data portion) of a packet and acquiring information about an upper layer(s). With this DPI function, the gateway apparatus 3 can read the header(s) of a packet(s) of a protocol(s) not terminated at the gateway apparatus 3 (extraction of packet information). The gateway apparatus 3 may have an extended DPI function of writing information in the header(s) in an upper layer(s) (setting of packet information). In addition, the packet information extraction unit 131 and the packet information setting unit 132 may have a function of terminating TCP and IP in upper layers.

The extraction (reading) of the packet information in the header of a packet is realized by extracting (reading) the packet information set in a predetermined area in the header of the packet. The setting (writing) of packet information in the header of a packet is realized by setting (writing) the packet information in the predetermined area. Next, an example in which the setting and extraction of the packet information is performed by using an IP packet header (an IP header) will be described. Fig. 3 illustrates a configuration of an IP header. Version represents the version of IP protocol. IHL (Internet Header Length) represents the length of the IP header. In a TOS (Type Of Service)/DSCP (Differentiated Services Code Point)/ECN (Explicit Congestion Notification) Field, any one of a TOS field, a DS field, or a revised ECN field illustrated in Fig. 4 is used. Precedence in the TOS field represents priority of the corresponding IP packet. A packet having a larger number in this field is recognized as a more important packet. Reserved Bit(s) is an unused 1-bit area. Likewise Precedence in the TOS field, DSCP in the DS field and DSCP in the revised ECN field represent priority of the corresponding IP packet. Since more bits are used in DSCP than those in Precedence in the TOS field, the priority of the IP packet can be set more finely. The DS field also includes an unused 2-bit area (Reserved Bits). In the revised ECN field, an ECT (ECN Capable Transport) code point and a CE (Congestion Experienced) code point are defined. In the revised ECN field, the congestion state can be indicated (namely, whether a congestion has occurred or is occurring can be indicated) by setting the value of the CE to 1. However, in the present exemplary embodiment, the congestion state may be indicated by setting the value of the ECT to 1. Namely, by using at least one of the values of ECT and CE, the congestion state can be indicated. Next, Total Length in the IP header represents the total volume of the corresponding IP packet. Identification is an identifier for identification of the corresponding IP packet. Flags are fragmentation state transition information. Fragment Offset is an identifier for indicating which portion of the fragments is included in the corresponding IP packet. TTL represents the lifetime of the corresponding IP packet. Protocol represents a protocol used in the upper layer. Header Checksum is a field for Checksum. Source Address and Destination Address are source and destination IP addresses, respectively. Options is a field in which extension information is set. Normally, this field is not used. Padding represents bits used for adjusting the volume of the IP header.

In the present exemplary embodiment, packet information is set by using at least one of the Reserved Bit(s) field, the Options field, and the revised ECN field in the IP header. In addition, the packet information set in one of these fields is extracted. For example, if the packet information is about a congestion state, as described above, by setting the value of the CE in the revised ECN field to 1, the congestion state can be indicated. Alternatively, a predetermined Bit in the Reserved Bit(s) field or the Options field may be defined as an area to be used for setting information about a congestion state. In such case, by changing the value in the area, the congestion state may be indicated. In addition, for example, not only information directly indicating a congestion state but also information indicating the volume of packets accumulated in a buffer in the relay apparatus 4 may be set in this area. In such case, an apparatus that reads (extracts) the information indicating the packet accumulation volume may determine whether a congestion state has occurred. In addition, information about communication quality, packet type information that indicates a type of a packet, and a packet identifier may be set (written) and extracted (read) in a like manner.

The packet forwarding unit 133 in Fig. 2 forwards an individual packet (an individual forwarding packet), in which the packet information has been set by the packet information setting unit 132, to the relay apparatus 4 or the packet transmission apparatus 5. For example, if the gateway apparatus 3 receives a packet from the relay apparatus 4, the packet forwarding unit 133 forwards the packet to the packet transmission apparatus 5 by using at least the upper IP in a layer different from those of GTP-U and UDP/IP used to receive the packet. If the gateway apparatus 3 receives a packet from the packet transmission apparatus 5, the packet forwarding unit 133 forwards the packet to the relay apparatus 4 by using at least GTP-U and UDP/IP in layers different from that of the IP at least used to receive the packet.

In addition, the packet forwarding unit 133 may have a function of receiving a packet(s) from the relay apparatus 4 or the packet transmission apparatus 5 by using a predetermined protocol(s).

### [Operation]

Next, an operation example of the gateway apparatus 3 according to the present exemplary embodiment will be described with reference to a flowchart in Fig. 5.

The gateway apparatus 3 extracts packet information set in a received packet, which is a packet that has been received from either the relay apparatus 4 or the packet transmission apparatus 5 (step S101). For example, if the gateway apparatus 3 has received a packet from the relay apparatus 4, the gateway apparatus 3 extracts packet information set by the relay apparatus 4 in the header of the packet (the received packet) in GTP-U or UDP/IP, which is a lower protocol than GTP-U. Alternatively, if the gateway apparatus 3 has received a packet from the packet transmission apparatus 5, the gateway apparatus 3 extracts packet information set by the packet transmission apparatus 5 in the header of the packet (the received packet) in IP, which is an upper protocol than GTP-U, or TCP, which is a further upper protocol than IP, for example.

Next, based on the packet information extracted, the gateway apparatus 3 sets packet information in a forwarding packet in a protocol in a layer different from that of the protocol of the received packet (step S102). For example, if the gateway apparatus 3 has received a packet from the relay apparatus 4, the gateway apparatus 3 sets packet information in the header of a packet in IP in a layer different from those of GTP-U and UDP/IP used to receive the received packet, or TCP, which is an upper layer protocol than IP, for example. If the gateway apparatus 3 has received a packet from the packet transmission apparatus 5, the gateway apparatus 3 sets packet information in the header of a packet in GTP-U or UDP/IP, which are protocols in layers different from the layer of the protocol of IP used to receive the received packet.

Next, the gateway apparatus 3 forwards the packet (the forwarding packet) in which the packet information has been set in step S102 to the relay apparatus 4 or the packet transmission apparatus 5 (step S103). For example, if the gateway apparatus 3 has received a packet from the relay apparatus 4, the gateway apparatus 3 forwards a forwarding packet to the packet transmission apparatus 5 by using at least IP in an upper layer different from those of GTP-U and UDP/IP used to receive the received packet. If the gateway apparatus 3 has received a packet from the packet transmission apparatus 5, the gateway apparatus 3 forwards a forwarding packet to the relay apparatus 4 by using at least GTP-U and UDP/IP in layers different from that of IP at least used to receive the received packet.

### [Advantageous effects]

A gateway apparatus according to the present exemplary embodiment sets information about a change in a network state, etc. in a packet as packet information and forwards the packet in which the packet information is set between a plurality of apparatuses using protocols in different layers. Thus, the gateway apparatus can notify a node in a neighboring network, the node using a protocol in a layer different from that used by a relay apparatus in a mobile wireless communication system, of the information about a change in a network state, etc. acquired by the relay apparatus, by setting the information in the packet. In addition, the gateway apparatus can also notify the relay apparatus of packet information set by the node in the neighboring network.

### <Second exemplary embodiment>

In a second exemplary embodiment, a first detailed example of the gateway apparatus, the relay apparatus, the packet transmission apparatus, and the wireless terminal according to the first exemplary embodiment will be described. In the present exemplary embodiment, as a suitable example, these apparatuses will be described assuming that the packet transmission apparatus is a server such as a source server and that the wireless terminal transmits a request for data such as a content to the server and receives the data from the server. In addition, in the present exemplary embodiment, information about a congestion state is used as packet information.

### [Configuration]

A communication system according to the second exemplary embodiment includes a gateway apparatus 23 in Fig. 9, a relay apparatus 24 in Fig. 8, a server 25 in Fig. 6, and a wireless terminal 26 in Fig. 7. The gateway apparatus 23, the relay apparatus 24, the server 25, and the wireless terminal 26 correspond to the gateway apparatus 3, the relay apparatus 4, the packet transmission apparatus 5, and the wireless terminal 6 in the communication system according to the first exemplary embodiment illustrated in Fig. 1, respectively.

Fig. 6 is a block diagram illustrating a configuration example of the server 25 according to the present exemplary embodiment. In Fig. 6, the server 25 includes a packet transmission and reception unit 251 and a transmission rate control unit 252. Among the function blocks included in the server 25, Fig. 6 illustrates only a few of the constituent elements. Namely, the server 25 includes a function block(s) (not illustrated) for causing the server 25 to function as a server.

When the packet transmission and reception unit 251 receives a message (a request message) requesting transmission of data from the wireless terminal 26, the packet transmission and reception unit 251 transmits a packet(s) of data (a data packet(s)) requested by the wireless terminal 26 to the gateway apparatus 23, based on a simultaneous data transmission size set by the transmission rate control unit 252. If the server 25 is a source server, since the source server holds all the original data therein, the packet transmission and reception unit 251 can transmit the data, based on the simultaneous transmission data size set by the transmission rate control unit 252. If the server 25 is a relay server such as a cache server, a proxy server, or an edge server, by previously copying the original data to a storage area (memory) in the relay server in a cache or by temporarily storing data streams transmitted from a source server in a buffer, the packet transmission and reception unit 251 can transmit the data packet(s), based on the set simultaneous data transmission size, without dependence on the throughput of the network between the source server and the server 25 (the relay server).

Next, when the packet transmission and reception unit 251 receives an ACK packet that corresponds to the data packet(s) from the wireless terminal 26, the packet transmission and reception unit 251 checks whether information about a congestion state is set in the ACK packet. More specifically, the packet transmission and reception unit 251 checks whether information about a congestion state is set in the IP or TCP header of the ACK packet. If the information is set, the packet transmission and reception unit 251 acquires (or extracts and reads) the information and notifies the transmission rate control unit 252 of the information. Examples of the information about a congestion state include information about the volume (amount) of data packets accumulated in a buffer included in the relay apparatus 24, the Round Trip Time (RTT) of the communication between the server 25 and the wireless terminal 26, the Receive WINdow size (RWIN), the duplicate ACK indicating the degree of congestion in the communication between the server 25 and the wireless terminal 26, information indicating exceeding of a retransmission timeout period, and an Explicit Congestion Notification (ECN) etc.. In addition, the packet transmission and reception unit 251 may set information about control on the simultaneous data packet transmission volume of the transmission rate control unit 252 in a packet and transmit the packet to the gateway apparatus 23.

When the packet transmission and reception unit 251 receives an ACK packet or at regular time intervals, the transmission rate control unit 252 controls the volume of data packets simultaneously transmitted to the wireless terminal 26, based on information acquired from the ACK packet received by the packet transmission and reception unit 251. Examples of the information acquired from the ACK packet include information about a congestion state such as RTT, RWIN, a duplicate ACK, exceeding of a retransmission timeout period, and an ECN message. However, the information is not limited to such examples. The information may be other information specified in TCP.

Methods of controlling the simultaneous data packet transmission volume may include, as in TCP, congestion control for increasing or decreasing the cwnd and flow control for restricting the simultaneous data packet transmission volume so as not to exceed the RWIN supplied from the wireless terminal 26. In the congestion control, for example, the cwnd is increased or decreased, similarly as in CUBIC TCP (NPL 1) and TCP NewReno (NPL 2). However, the method of increasing or decreasing the cwnd is not limited to such examples. The cwnd may be increased or decreased in accordance with another known TCP congestion control method(s).

Fig. 7 is a block diagram illustrating a configuration example of the wireless terminal 26 according to the present exemplary embodiment. In Fig. 7, the wireless terminal 26 includes a packet transmission and reception unit 261 and a data configuration unit 262. Among the function blocks included in the wireless terminal 26, Fig. 7 illustrates only a few of the constituent elements. Namely, the wireless terminal 26 includes a function block(s) (not illustrated) for causing the wireless terminal 26 to function as a wireless terminal.

The packet transmission and reception unit 261 transmits a message (a request message) requesting transmission of data from the server 25 (a source server if the server 25 is a relay server) to the relay apparatus 24. The request message is received by the server 25 via the relay apparatus 24 and the gateway apparatus 23. In addition, when the packet transmission and reception unit 261 receives a data packet transmitted by the server 25 in response to the request message, the packet transmission and reception unit 261 transmits an ACK packet that corresponds to the data packet to the server 25 via the relay apparatus 24. An ACK packet specified in TCP is used as the ACK packet.

In addition, based on the data packet received by the packet transmission and reception unit 261, the data configuration unit 262 reconfigures the data transmitted from the server 25.

Fig. 8 is a block diagram illustrating a configuration example of the relay apparatus 24 according to the present exemplary embodiment. In Fig. 8, the relay apparatus 24 includes a congestion detection unit 241, a congestion information setting unit 242, and a packet forwarding unit 243. Among the function blocks included in the relay apparatus 24, Fig. 8 illustrates only a few of the constituent elements. Namely, the relay apparatus 24 includes a function block(s) (not illustrated) for causing the relay apparatus 24 to function as a relay apparatus. As in the first exemplary embodiment, the relay apparatus 24 according to the present exemplary embodiment may be any one of a radio base station, an S-GW, and an MME.

When the packet forwarding unit 243 receives a data packet or an ACK packet or at regular time intervals, the congestion detection unit 241 detects whether a congestion has occurred in a predetermined network. As in the first exemplary embodiment, the predetermined network includes at least one of a wireless network between a radio base station and the wireless terminal and a wired network such as a core network. For example, the congestion is detected based on the total volume of data packets between reception and transmission by the relay apparatus 24. For example, when the current value of the total volume of data packets (the packet accumulation volume) accumulated in a buffer (not illustrated) included in the relay apparatus 24 exceeds a predetermined threshold, the congestion detection unit 241 determines that a congestion has occurred. However, the congestion detection method is not limited to such example. For example, the congestion detection unit 241 may determine that a congestion has occurred when a statistical value (for example, an average value, an index moving average value, or a minimum value) of the packet accumulation volume measured for a certain period of time in the past exceeds a predetermined threshold. In addition, a packet accumulation volume may be measured for an individual one of a plurality of wireless terminals 26. In this case, when the packet accumulation amount of one wireless terminal 26 exceeds a predetermined threshold, the congestion detection unit 241 may determine that a congestion has occurred only in the communication (or the communication path such as a bearer, for example) with this wireless terminal 26. In addition, for example, a plurality of predetermined thresholds may be set, and the degree of congestion may be determined in a stepwise manner based on the threshold exceeded by the packet accumulation volume. For example, instead of using the packet accumulation volume, the congestion detection unit 241 may use a value based on (for example, the difference between) the volume of data packets that the relay apparatus 24 has transmitted to the wireless terminal 26 and the volume of data acknowledged by an ACK packet(s) that the relay apparatus 24 has received from the wireless terminal 26. In such case, when the value exceeds a predetermined threshold, the congestion detection unit 241 may determine that a congestion has occurred. In addition, as described in the first exemplary embodiment, when the traffic inputted to the relay apparatus 24 (for example, the total volume of data packets inputted within a predetermined period of time) exceeds the band of a communication channel used for output, the congestion detection unit 241 may determine that a congestion has occurred. For example, when the total volume of data packets inputted and outputted exceeds the throughput of the relay apparatus 24, the congestion detection unit 241 may determine that a congestion has occurred.

When the congestion detection unit 241 detects a congestion, the congestion information setting unit 242 sets information about the congestion state in the ACK packet encapsulated. For example, the congestion information setting unit 242 sets the information about the congestion state in the ACK packet by setting the value of at least one of the CE bit and the ECT bit in the revised ECN field in the IP header in the UDP (User Datagram Protocol)/lower IP layer in which the ACK packet encapsulated by GTP-U is stored, to 1. However, the congestion information setting method is not limited to such example. For example, the IP Precedence field in the ToS field in the IP header in the lower IP layer or the Differentiated Services Code Point field may be set to a predetermined bit pattern. In addition, the information about the congestion state may be set in a predetermined area in the GTP-U header. If the congestion detection unit 241 determines the degree of congestion in a stepwise manner, a value based on the degree of congestion may be set in any of the above areas.

The packet forwarding unit 243 receives a packet transmitted by the wireless terminal 26. More specifically, if the relay apparatus 24 is a radio base station, the packet forwarding unit 243 receives a packet in which the ACK packet transmitted by the wireless terminal 26 is encapsulated, by using at least the MAC layer, the RLC layer, and PDCP (Packet Data Convergence Protocol). If the relay apparatus 24 is an S-GW, the packet forwarding unit 243 receives a packet in which the ACK packet transmitted by the wireless terminal 26 is encapsulated, by using at least GTP-U and UDP/IP. Next, the packet forwarding unit 243 notifies the congestion detection unit 241 of the reception of the ACK packet or the ACK packet. In addition, the packet forwarding unit 243 transmits a packet including the congestion state information set by the congestion information setting unit 242 to the gateway apparatus 23. More specifically, the packet forwarding unit 243 transmits a packet including the congestion state information to the gateway apparatus 23 by using GTP-U and UDP/IP in a lower layer than that of GTP-U.

Fig. 9 is a block diagram illustrating a configuration example of the gateway apparatus 23 according to the present exemplary embodiment. In Fig. 9, the gateway apparatus 23 includes a congestion information extraction unit 231, a congestion information setting unit 232, and a packet forwarding unit 233. Compared with the gateway apparatus 3 according to the first exemplary embodiment, the congestion information extraction unit 231, the congestion information setting unit 232, and the packet forwarding unit 233 correspond to the packet information extraction unit 131, the packet information setting unit 132, and the packet forwarding unit 133, respectively. Among the function blocks included in the gateway apparatus 23, Fig. 9 illustrates only a few of the constituent elements. Namely, the gateway apparatus 23 includes a function block(s) (not illustrated) for causing the gateway apparatus 23 to function as a gateway. As in the first exemplary embodiment, the gateway apparatus 23 according to the present exemplary embodiment may be a P-GW or an S-GW.

The congestion information extraction unit 231 extracts the information about the congestion state set in the ACK packet (the received packet) that has been received from the relay apparatus 24 and whose transmission source is the wireless terminal 26. More specifically, when the congestion information extraction unit 231 decapsulates the ACK packet received by the packet forwarding unit 233 by using at least GTP-U and UDP/IP, the congestion information extraction unit 231 checks whether information about a congestion state (for example, the CE bit or the bit pattern in the IP header that represents a congestion state) is set in the header in GTP-U or IP by which the ACK packet is encapsulated. If such information about a congestion state is set, the congestion information extraction unit 231 extracts the information about a congestion state and notifies the congestion information setting unit 232 of the information.

The congestion information setting unit 232 sets information based on the congestion state information extracted by the congestion information extraction unit 231 in a forwarding packet in a protocol in a layer different from that of the packet received from the relay apparatus 24. More specifically, the congestion information setting unit 232 sets the congestion state information extracted by the congestion information extraction unit 231, for example, in the header of the ACK packet (a forwarding packet to be forwarded to the server 25) that has been decapsulated. For example, the congestion state information is set in the ACK packet is performed by a method of setting at least one of the values of the CE bit and the ECT bit in the revised ECN field in the IP (the IP, which is in an upper layer than that of GTP-U) header of the ACK packet to 1. Alternatively, for example, the value of the ECE (ECN-Echo) bit in the TCP header may be set to 1. The congestion information setting method is not limited to the above methods. For example, the congestion state information may be set in the Options field in the TCP header. In addition, if congestion state information is already set in the IP header in UDP/lower IP by which the received ACK packet is encapsulated and if the congestion information setting unit 232 sets the congestion state information in the IP header in IP which is an upper layer than GTP-U, the congestion information setting unit 232 may directly transcribe the congestion state information from the IP header in UDP/lower IP into the IP header in the upper layer IP. In addition, the congestion information setting unit 232 may determine whether to set the congestion state information in a forwarding packet and the information to be set in the forwarding packet, based on the information extracted by the congestion information extraction unit 231. For example, if the packet transmitted from the relay apparatus 24 only includes information indicating the packet accumulation volume in a buffer in the relay apparatus 24, the congestion information setting unit 232 may determine whether this packet accumulation volume, which has been extracted by the congestion information extraction unit 231, satisfies a predetermined condition. If the predetermined condition is satisfied, the congestion information setting unit 232 may set the congestion state information in the forwarding packet.

In addition, when the congestion information setting unit 232 according to the present exemplary embodiment receives a data packet that includes information about control on the simultaneous data packet transmission volume performed in response to occurrence of a congestion from the server 25, the congestion information setting unit 232 may end the setting of the congestion state information in the decapsulated ACK packet (the forwarding packet). In addition, in parallel with this operation, the congestion information setting unit 232 may delete the information about control on the simultaneous data packet transmission volume from the corresponding data packet. The information about control on the simultaneous data packet transmission volume is set by setting the CWR bit in the TCP header to 1, for example. In addition, for example, the congestion information setting unit 232 may set the information about control on the simultaneous data packet transmission volume in the Options field in the TCP header.

The packet forwarding unit 233 receives the packet transmitted by the wireless terminal 26 from the relay apparatus 24. More specifically, the packet forwarding unit 233 receives the packet in which the ACK packet transmitted by the wireless terminal 26 is encapsulated by using at least GTP-U and UDP/IP. Next, the packet forwarding unit 233 notifies the congestion information extraction unit 231 of the reception of the ACK packet or the ACK packet. In addition, the packet forwarding unit 233 forwards the packet (the forwarding packet) including the congestion state information set by the congestion information setting unit 232 to the server 25. More specifically, the packet forwarding unit 233 forwards the packet to the server 25 by using at least IP in an upper layer different from those of GTP-U and UDP/IP used to receive the packet. In addition, the packet forwarding unit 233 can perform encapsulation and decapsulation of the packet received. For example, the packet forwarding unit 233 encapsulates and decapsulates the packet by encapsulating and decapsulating a TCP/upper IP packet by using GTP-U. The encapsulation and decapsulation method is not limited to such example. Other existing encapsulation and decapsulation methods may be used.

### [Operation]

Next, an operation example of the communication system according to the present exemplary embodiment will be described in detail with reference to a sequence diagram in Fig. 10.

First, the wireless terminal 26, the server 25, the relay apparatus 24, and the gateway apparatus 23 establish connections with each other (step S201). These connections are a TCP connection and a Radio Resource Control (RRC) connection, for example. Namely, the wireless terminal 26 establishes an RRC connection with the radio base station. In addition, the wireless terminal 26 establishes a TCP connection with the server 25. The connections established among these apparatuses are not limited to the above examples. Necessary connections are established as needed. Since this connection operation can be performed in accordance with a known technique, description thereof will be omitted. In addition, in step S201, the wireless terminal 26 may transmit a message (a request message) requesting transmission of a data packet to the wireless terminal 26 to the server 25.

The server 25 transmits a corresponding data packet to the wireless terminal 26 (step S202). The wireless terminal 26 receives the corresponding data packet via the gateway apparatus 23 and the relay apparatus 24.

The wireless terminal 26 transmits an ACK packet addressed to the server 25 as an acknowledgement to the received data packet (step S203). First, the relay apparatus 24 receives the ACK packet. The wireless terminal 26 may transmit the ACK packet with respect to an individual data packet received from the server 25 or may transmit the ACK packet with respect to several data packets received from the server 25 as a single reception response.

When receiving the ACK packet from the wireless terminal 26, the relay apparatus 24 detects whether a congestion has occurred in a predetermined network (step S204). Since the predetermined network and the method of detecting a congestion have already been described above, description thereof will be omitted. While the relay apparatus 24 detects whether a congestion has occurred in step S204 when receiving the ACK packet from the wireless terminal 26, the relay apparatus 24 may detect whether a congestion has occurred when receiving a data packet from the server 25 via the gateway apparatus 23. Alternatively, the relay apparatus 24 may detect whether a congestion has occurred when receiving a message for establishing a connection in step S201 (for example, at least one of a SYN packet, a SYN-ACK packet, and an ACK packet in a 3-way handshake for establishing a TCP connection). The relay apparatus 24 may perform the congestion detection at regular time intervals.

If the relay apparatus 24 detects a congestion in the predetermined network, the relay apparatus 24 sets information about the congestion state in the encapsulated ACK packet (step S205). The encapsulated ACK packet in step S205 is a GTP-U packet or a UDP/IP packet in a lower layer than that of GTP-U, for example.

The relay apparatus 24 transmits the ACK packet to the gateway apparatus 23 by using GTP-U or UDP/IP in a layer lower than that of GTP-U (step S206).

The gateway apparatus 23 receives the ACK packet transmitted by the wireless terminal 26 from the relay apparatus 24 and extracts the congestion state information set in the ACK packet (the received packet) (step S207). More specifically, when the gateway apparatus 23 decapsulates the ACK packet received by using GTP-U and UDP/IP, the gateway apparatus 23 checks whether any information about a congestion state is set in the header in GTP-U or the like by which the ACK packet is encapsulated. If congestion state information is set, the gateway apparatus 23 extracts the congestion state information.

The gateway apparatus 23 sets information based on the congestion state information extracted in step S207 in a forwarding packet in a protocol in a layer different from that of the packet received from the relay apparatus 24 (step S208).

The gateway apparatus 23 forwards the packet to the server 25 by using at least IP in an upper layer different from those of GTP-U and UDP/IP used to receive the ACK packet (step S209).

The server 25 receives the ACK packet, which corresponds to the data packet, from the wireless terminal 26 via the gateway apparatus 23, etc. and checks whether any information about a congestion state is set in the ACK packet. If such information is set, the server 25 acquires (or extracts and reads) the information concerned (step S210).

When the server 25 receives the ACK packet in step S210 or at regular time intervals, the server 25 controls the volume of data packets simultaneously transmitted to the wireless terminal 26, based on the information acquired from the ACK packet received in step S210 (for example, based on the congestion state information) (step S211). The method of controlling the simultaneous data packet transmission volume has already been described above, description thereof will be omitted.

Based on the simultaneous data packet transmission volume set in step S211, the server 25 transmits a data packet(s) to the wireless terminal 26 (step S212). In addition, if the server 25 has already performed control on the simultaneous data packet transmission volume, the server 25 may set information indicating that such control has been performed in a data packet(s).

In addition, if the gateway apparatus 23 receives the data packet in which the information indicating that the control on the simultaneous data packet transmission volume has been performed is set from the server 25, in response to the reception of this data packet, the gateway apparatus 23 may end the setting of the information based on the congestion state information in step S208. In the present exemplary embodiment, the congestion state information is used as information to be set in the packet. However, the present exemplary embodiment is not limited to such example. For example, the relay apparatus 24 or the gateway apparatus may acquire at least any one of the communication throughput, the transmission delay time, the transmission capacity, the total communication time, the error rate, the transmission loss, the number of occurrences of communication disconnection, and the radio quality, and use the acquired information as the information (packet information) to be set in the packet. In addition, the packet information may be at least one of the following items of information: packet type information indicating a type of a packet; and a packet identifier. The packet information may be a combination of these items of information.

The present exemplary embodiment has been described by using an example in which the server 25 transmits a data packet(s) to the wireless terminal 26 and the wireless terminal 26 transmits an ACK packet(s) to the server 25. However the present exemplary embodiment is not limited to such example. The server 25 may transmit an ACK packet(s) to the wireless terminal 26, and the wireless terminal 26 may transmit a data packet(s) to the server 25.

In addition, the configuration and the operation according to the present exemplary embodiment may be implemented by combining a configuration and an operation according to another exemplary embodiment, as needed.

### [Advantageous effects]

A gateway apparatus according to the present exemplary embodiment sets information about a congestion state acquired by a relay apparatus in a forwarding packet to be forwarded to a server and forwards the forwarding packet to the server. Thus, even in a mobile wireless communication system environment, the gateway apparatus can notify the server outside the mobile wireless communication system of the congestion state information at an early stage before an excessive amount of data flows into a network. In addition, the server can control its transmission rate at an early stage.

### <Third exemplary embodiment>

In a third exemplary embodiment, a second detailed example of the gateway apparatus, the relay apparatus, the packet transmission apparatus, and the wireless terminal according to the first exemplary embodiment will be described. In the present exemplary embodiment, as a suitable example, these apparatuses will be described assuming that the packet transmission apparatus is a server such as a source server and that the wireless terminal transmits a request for data such as a content to the server and receives the data from the server. In addition, in the present exemplary embodiment, information about radio quality is used as packet information.

### [Configuration]

A communication system according to the third exemplary embodiment includes a gateway apparatus 33 in Fig. 12, a relay apparatus 34 in Fig. 11, a server 25 in Fig. 6, and a wireless terminal 26 in Fig. 7. Namely, the server 25 and the wireless terminal 26 are configured in the same way as those according to the second exemplary embodiment. The gateway apparatus 33 and the relay apparatus 34 correspond to the gateway apparatus 3 and the relay apparatus 4 in the communication system according to the first exemplary embodiment illustrated in Fig. 1, respectively.

Fig. 11 is a block diagram illustrating a configuration example of the relay apparatus 34 according to the present exemplary embodiment. In Fig. 11, the relay apparatus 34 includes a radio quality acquisition unit 341, a radio quality information setting unit 342, and a packet forwarding unit 343. Among the function blocks included in the relay apparatus 34, Fig. 11 illustrates only a few of the constituent elements. Namely, the relay apparatus 34 includes a function block(s) (not illustrated) for causing the relay apparatus 34 to function as a relay apparatus. As in other exemplary embodiments, the relay apparatus 34 according to the present exemplary embodiment may be any one of a radio base station, an S-GW, and an MME.

When the packet forwarding unit 343 receives a data packet or an ACK packet or at regular time intervals, the radio quality acquisition unit 341 acquires information about radio quality of the wireless area between the wireless terminal 26 and the corresponding radio base station. In the present exemplary embodiment, for example, the information about the radio quality may be an index indicating a radio wave state such as SINR, CQI, RSSI, ASU, RSRP, or RSRQ. Alternatively, the information about the radio quality may be the transmission throughput of data packets measured per wireless terminal 26 or for the entire radio base station (the total volume of data packets transmitted from the radio base station to the wireless terminal 26 per unit time). Or, the information about the radio quality may be a statistical value of the above transmission throughput. In addition, for example, the information about the radio quality may be the used amount or the usage rate of radio resources (frequencies, time, code modulation methods) measured per wireless terminal 26 or for the entire radio base station. The information about the radio quality may be a statistical value of the above used amount or usage rate. In addition, for example, the information about the radio quality may be an execution history of code modulation methods per wireless terminal 26 or for the entire radio base station. The information may be the number of active wireless terminals 26 (users) communicating with the radio base station or the number of active connections.

For example, the radio quality acquisition unit 341 may acquire the information about the radio quality by receiving the radio quality measured by the wireless terminal 26 from the wireless terminal 26. However, the acquisition of the information about the radio quality is not limited to such example. For example, if the relay apparatus 34 is a radio base station, the relay apparatus 34 may measure the information about the radio quality. If the relay apparatus 34 is not a radio base station, a radio base station may measure the radio quality, and the radio quality acquisition unit 341 may receive the information about the measured radio quality from the radio base station.

The radio quality information setting unit 342 sets the information about the radio quality acquired by the radio quality acquisition unit 341 in an encapsulated ACK packet. For example, in the present exemplary embodiment, the information about the radio quality is set in the Options field in the IP header in the UDP/lower IP layer which further encapsulates the ACK packet encapsulated by GTP-U. However, the radio quality information setting method is not limited to this method. The packet information setting methods described in the other exemplary embodiments may be used. In addition, the radio quality information setting method is not limited to the packet information setting methods described in the other exemplary embodiments. For example, in order to compress the volume of data, a numerical value (for example: an SINR value) indicating the information about the radio quality may be converted into a value or information expressed by a smaller number of levels than the numerical value, and the value or information obtained by the conversion may be set in the Options field in the IP header. More specifically, a predetermined equation for converting a numerical value indicating the information about the radio quality into a value that falls between 0 and a predetermined value n defined as a range taken by a value to be set in an IP header may be created, for example. A value obtained as a result of the conversion using this predetermined equation may be set in the IP header. In addition, at least one threshold may be set within the range in which a numerical value indicating the information about the radio quality can take, and an index that represents whether the value exceeds the threshold or an index that represents the condition of the radio quality based on whether the value exceeds the threshold may be set in the IP header.

The packet forwarding unit 343 receives a packet transmitted by the wireless terminal 26. More specifically, if the relay apparatus 34 is a radio base station, the packet forwarding unit 343 receives a packet in which the ACK packet transmitted by the wireless terminal 26 is encapsulated by using at least a MAC layer, an RCL layer, and PDCP (Packet Data Convergence Protocol). In addition, if the relay apparatus 34 is an S-GW, the packet forwarding unit 343 receives a packet in which the ACK packet transmitted by the wireless terminal 26 is encapsulated by using at least GTP-U and UDP/IP. Next, the packet forwarding unit 343 notifies the radio quality acquisition unit 341 of the reception of the ACK packet or the ACK packet. In addition, the packet forwarding unit 343 transmits a packet including the radio quality information to the gateway apparatus 33. More specifically, the packet forwarding unit 343 transmits a packet including the radio quality information to the gateway apparatus 33 by using at least GTP-U and UDP/IP in a lower layer than that of GTP-U.

Fig. 12 is a block diagram illustrating a configuration example of the gateway apparatus 33 according to the present exemplary embodiment. In Fig. 12, the gateway apparatus 33 includes a radio quality information extraction unit 331, a radio quality information setting unit 332, and a packet forwarding unit 333. Among the function blocks included in the gateway apparatus 33, Fig. 12 illustrates only a few of the constituent elements. Namely, the gateway apparatus 33 includes a function block(s) (not illustrated) for causing the gateway apparatus 33 to function as a gateway. As in other exemplary embodiments, the gateway apparatus 33 according to the present exemplary embodiment may be a P-GW or an S-GW.

The radio quality information extraction unit 331 extracts the information about the radio quality set in the ACK packet (the received packet) that has been received from the relay apparatus 34 and whose transmission source is the wireless terminal 26. More specifically, when the packet forwarding unit 333 decapsulates the ACK packet received by using GTP-U and UDP/IP, the radio quality information extraction unit 331 checks whether information about radio quality (for example, a value indicating information about radio quality set in the Options field in the IP header) is set in the header in GTP-U, by which the ACK packet is encapsulated, or in the lower IP, etc. If such radio quality information is set, the radio quality information extraction unit 331 extracts the radio quality information and notifies the radio quality information setting unit 332 of the information.

The radio quality information setting unit 332 sets information based on the radio quality information extracted by the radio quality information extraction unit 331 in a forwarding packet in a protocol in a layer different from the layer of the protocol of the packet received from the relay apparatus 34. More specifically, for example, the radio quality information setting unit 332 sets information based on the radio quality information extracted by the radio quality information extraction unit 331 in the header of the ACK packet (a forwarding packet to be forwarded to the server 25) that has been decapsulated. In the present exemplary embodiment, for example, the radio quality information is set by setting information based on the radio quality information in the Options field in the TCP header or the IP header in TCP/IP of the ACK packet (herein, in the IP header in IP, which is an upper layer than that of GTP-U). However, the radio quality information setting method is not limited to such example. The packet information setting methods described in the other exemplary embodiments may also be used.

Alternatively, in order to compress the data volume, for example, a numerical value indicating radio quality information may be converted into a value or information expressed by a smaller number of levels than the numerical value, and the value or information obtained by the conversion may be set in the Options field in the corresponding TCP header.

In addition, the radio quality information setting unit 332 may determine whether or not to set the radio quality information in a forwarding packet and information to be set in a forwarding packet, based on the information extracted by the radio quality information extraction unit 331. For example, if the packet transmitted from the relay apparatus 34 only includes information indicating an index indicating a radio wave state such as SINR, the radio quality information setting unit 332 may determine whether the index of the radio wave state extracted by the radio quality information extraction unit 331 satisfies a predetermined condition. If the predetermined condition is satisfied, the radio quality information setting unit 332 may set the radio quality information in the forwarding packet.

The packet forwarding unit 333 receives the packet transmitted by the wireless terminal 26 from the relay apparatus 34. More specifically, the packet forwarding unit 333 receives the packet in which the ACK packet transmitted by the wireless terminal 26 is encapsulated by using at least GTP-U and UDP/IP. Next, the packet forwarding unit 333 notifies the radio quality acquisition unit 331 of the reception of the ACK packet or the ACK packet. In addition, the packet forwarding unit 333 forwards the packet (the forwarding packet) including the radio quality information set by the radio quality information setting unit 332 to the server 25. More specifically, the packet forwarding unit 333 forwards the packet to the server 25 by using at least IP in an upper layer different from those of GTP-U and UDP/IP used to receive the packet. In addition, the packet forwarding unit 333 can perform encapsulation and decapsulation of the packet received. For example, the packet forwarding unit 333 encapsulates and decapsulates a TCP/upper IP packet by using GTP-U. The encapsulation and decapsulation method is not limited to such example. Other existing encapsulation and decapsulation methods may be used.

### [Operation]

Next, an operation example of the communication system according to the present exemplary embodiment will be described in detail with reference to a sequence diagram in Fig. 13.

Since steps S301 to S303 are the same as steps S201 to S203 according to the second exemplary embodiment, description thereof will be omitted.

When receiving the ACK packet from the wireless terminal 26, the relay apparatus 34 acquires the radio quality information in the wireless area between the wireless terminal 26 and the corresponding radio base station (step S304). Since the acquisition of the radio quality information has already been described above, description thereof will be omitted. While the relay apparatus 34 acquires the radio quality information in step S304 when receiving the ACK packet from the wireless terminal 26, the present exemplary embodiment is not limited to such example. The relay apparatus 34 may acquire the radio quality information when receiving a data packet from the server 25 via the gateway apparatus 33 or when receiving a message for establishing a connection (for example, at least one of a SYN packet, a SYN-ACK packet, and an ACK packet in a 3-way handshake for establishing a TCP connection) in step S201. In addition, the relay apparatus 34 may acquire the radio quality information at regular time intervals.

After acquiring the radio quality information, the relay apparatus 34 sets the information in the encapsulated ACK packet (step S305). For example, the encapsulated ACK packet in step S305 is a GTP-U packet or a UDP/IP packet in a lower layer than that of GTP-U.

The relay apparatus 34 transmits the ACK packet to the gateway apparatus 33 by using GTP-U or UDP/IP in a lower layer than that of GTP-U (step S306).

The gateway apparatus 33 receives the ACK packet transmitted by the wireless terminal 26 from the relay apparatus 34 and extracts the radio quality information set in the ACK packet (the received packet) (step S307). More specifically, when the gateway apparatus 33 decapsulates the received ACK packet by using GTP-U and UDP/IP, the gateway apparatus 33 checks whether radio quality information is set in the header in GTP-U, etc. by which the ACK packet is encapsulated. If radio quality information is set, the gateway apparatus 33 extracts the radio quality information.

The gateway apparatus 33 sets information based on the radio quality information extracted in step S307 in a forwarding packet in a protocol in a layer different from that of the protocol of the packet received from the relay apparatus 34 (step S308).

The gateway apparatus 33 forwards the packet to the server 25 by using at least the upper IP in a layer different from those of GTP-U and UDP/IP used to receive the ACK packet (step S309).

The server 25 receives the ACK packet that corresponds to the data packet from the wireless terminal 26 via the gateway apparatus 23, etc. and checks whether radio quality information is set in the ACK packet. If such information is set, the server 25 acquires (or extracts and reads) the information (step S310).

When receiving the ACK packet in step S310 or at regular time intervals, the server 25 controls the volume of data packets simultaneously transmitted to the wireless terminal 26, based on information (for example, the radio quality information) acquired from the ACK packet received in step S310 (step S311). For example, if the information acquired from the ACK packet indicates good radio quality, the server 25 may increase the volume of data packets simultaneously transmitted to the wireless terminal 26.

Based on the simultaneous data packet transmission volume set in step S311, the server 25 transmits a data packet(s) to the wireless terminal 26 (step S312). If the server 25 has previously performed a control operation on the simultaneous data packet transmission volume, the server 25 may set information indicating that such control has been performed in the data packet(s).

In addition, if the gateway apparatus 33 receives a data packet including information indicating that a control operation on the simultaneous data packet transmission volume has been performed from the server 25, in response to this reception of the data packet, the gateway apparatus 33 may end the setting of the information based on the radio quality information in step S308.

As a suitable example, the present exemplary embodiment has been described assuming that information set in an individual packet is information about radio quality. However, the present exemplary embodiment is not limited to such example. For example, the relay apparatus 34 or the gateway apparatus may acquire at least any one of the following items of information: the information about a congestion state according to the first exemplary embodiment, the communication throughput in a wired or wireless area, the transmission delay time, the transmission capacity, the total communication time, the error rate, the transmission loss, and the number of occurrences of communication disconnection. In such case, the relay apparatus 34 or the gateway apparatus may use the acquired information as information (packet information) to be set in an individual packet. In addition, the packet information may be at least any one of the following items of information: packet type information indicating a type of a packet and a packet identifier. In addition, the packet information may be a combination of these items of information.

In addition, the present exemplary embodiment has been described by using an example in which the server 25 transmits a data packet(s) to the wireless terminal 26, and the wireless terminal 26 transmits an ACK packet(s) to the server 25. However, the present exemplary embodiment is not limited to such example. The server 25 may transmit an ACK packet(s) to the wireless terminal 26, and the wireless terminal 26 may transmit a data packet(s) to the server 25.

In addition, the configuration and the operation according to the present exemplary embodiment may be implemented by combining a configuration and an operation according to another exemplary embodiment, as needed.

### [Advantageous effects]

A gateway apparatus according to the present exemplary embodiment sets information about radio quality acquired by a relay apparatus in a forwarding packet to be forwarded to a server and transmits the forwarding packet to the server. Thus, even if the server is arranged outside the mobile wireless communication system in which the relay apparatus is arranged, the server can control the transmission rate based on change of the radio quality.

### <Fourth exemplary embodiment>

In a fourth exemplary embodiment, a third detailed example of the gateway apparatus, the relay apparatus, the packet transmission apparatus, and the wireless terminal according to the first exemplary embodiment will be described. In the present exemplary embodiment, as a suitable example, these apparatuses will be described assuming that the packet transmission apparatus is a server such as a source server and that the wireless terminal transmits a request for data such as a content to the server and receives the data from the server. In addition, in the present exemplary embodiment, packet type information and a packet identifier are used as packet information.

### [Configuration]

A communication system according to the fourth exemplary embodiment includes a gateway apparatus 43 in Fig. 14, a relay apparatus 44 in Fig. 15, a server 25 in Fig. 6, and a wireless terminal 26 in Fig. 7. Namely, the server 25 and the wireless terminal 26 are configured in the same way as those according to the second exemplary embodiment. The gateway apparatus 43 and the relay apparatus 44 correspond to the gateway apparatus 3 and the relay apparatus 4 in the communication system according to the first exemplary embodiment illustrated in Fig. 1, respectively.

Fig. 14 is a block diagram illustrating a configuration example of the gateway apparatus 43 according to the present exemplary embodiment. In Fig. 14, the gateway apparatus 43 includes a packet information extraction unit 431, a packet type setting unit 432, and a packet forwarding unit 433. Among the function blocks included in the gateway apparatus 43, Fig. 14 illustrates only a few of the constituent elements. Namely, the gateway apparatus 43 includes a function block(s) (not illustrated) for causing the gateway apparatus 43 to function as a gateway. As in other exemplary embodiments, the gateway apparatus 43 according to the present exemplary embodiment may be a P-GW or an S-GW.

The packet information extraction unit 431 acquires a packet identifier or packet type information set in a data packet received from the server 25. In the present exemplary embodiment, the packet identifier is a TCP SN, for example. The packet type information is information that indicates a type of the corresponding packet. Examples of the packet type information include information indicating whether the corresponding packet is an initially transmitted TCP packet or a retransmitted TCP packet and information indicating whether the TCP packet is a prefetched packet. In other words, the packet type information and the packet identifier are information (packet feature information) that indicates a feature of the corresponding packet.

If the packet identifier is a TCP SN, acquisition of the packet identifier can be realized by reading the TCP header of the corresponding data packet received, for example.

If packet type information is set in the header, etc. of a data packet received from the server 25, the packet type information is acquired by reading the packet type information set in the header of the received data packet. More specifically, if the server 25 has set information (packet type information) indicating whether the corresponding data packet transmitted from the server 25 is a retransmitted TCP packet in the IP (IP, which is an upper protocol than GTP-U) header of this data packet, the packet information extraction unit 431 can extract the packet type information by reading the IP header of the data packet received.

It is desirable that the packet information extraction unit 431 have a DPI function for performing processing in the TCP layer (for acquiring TCP SNs and determining whether an individual TCP packet is an initially transmitted or retransmitted packet). However, the present exemplary embodiment is not limited to such example. Namely, as long as the packet information extraction unit 431 has a function of acquiring the TCP SN of a data packet received from the server 25 and determining whether the data packet is an initially transmitted TCP packet or a retransmitted TCP packet, the packet information extraction unit 431 does not need the DPI function for acquiring information in an upper layer(s).

In addition, before data is transmitted from the server 25, packet identifiers are set in individual packets (data packets) obtained by dividing the data. More specifically, when the server 25 transmits data to the wireless terminal 26 by using TCP, the server 25 divides the data into TCP packets (data packets), allocates TCP SNs to the individual TCP packets, and transmits the TCP packets to the wireless terminal 26.

Hereinafter, the present exemplary embodiment will be described assuming that the packet information extraction unit 431 acquires a packet identifier from a data packet received from the server 25.

The packet type setting unit 432 sets packet type information based on the corresponding packet identifier acquired by the packet information extraction unit 431 in a forwarding packet in a protocol in a layer different from that of the protocol of the packet received from the server 25. More specifically, based on the packet identifier acquired by the packet information extraction unit 431, the packet type setting unit 432 determines the packet type information of the data packet in which the packet identifier is set. Next, the packet type setting unit 432 sets the packet type information in the header of a data packet (a forwarding packet to be forwarded to the relay apparatus 44) that has been encapsulated.

In the present exemplary embodiment, various methods may be adopted to determine the packet type information based on a packet identifier. For example, the following methods may be used. Namely, if the packet type information is information indicating whether the corresponding packet is a retransmitted TCP packet, first, the packet information extraction unit 431 or a different functional unit in the gateway apparatus 43 acquires and holds the SN (the TCP SN, which is an example of the packet identifier) set in the TCP header of the data packet received from the server 25. This operation is repeated per data packet reception, and if a data packet having the same TCP SN as that held is received, the packet type setting unit 432 determines that the corresponding data packet is a retransmitted TCP packet. Otherwise, the packet type setting unit 432 determines that the corresponding data packet is an initially transmitted TCP packet.

In addition, since applications (for example, moving images) using TCP are normally executed by using TCP packets in the ascending order of the TCP SNs, the server 25 transmits TCP packets in the ascending order of the TCP SNs. Thus, the gateway apparatus 43 may monitor the TCP SNs of the received data packets (acquire the packet identifiers). If the TCP SN of the most recently received data packet is smaller than that of a previously received data packet, the gateway apparatus 43 determines that the most recently received data packet is a retransmitted TCP packet.

In addition, the packet information extraction unit 431 may determine the packet type information based on the packet identifier. Namely, the packet information extraction unit 431 may determine the packet type information based on the packet identifier set in a received data packet and use the determined packet type information as the information extracted from the received data packet.

In addition, the packet type setting unit 432 may determine whether to set the packet type information in a forwarding packet based on the information extracted by the packet information extraction unit 431.

In addition, for example, the packet type information is set in a forwarding packet by setting the packet type information in a predetermined area in the header of the data packet in GTP-U or UDP/IP, which is a lower protocol than GTP-U (for example, a Flow Priority Indicator (FPI) field in the GTP-U header or an IP Precedence field or an Options field in a ToS field in the lower IP header). The packet information setting methods described in the other exemplary embodiments may also be used. In addition, the packet type setting unit 432 may set (transcribe) the packet identifier (or the packet type information) acquired by the packet information extraction unit 431 in the forwarding packet without change.

The packet forwarding unit 433 receives a data packet transmitted by the server 25. More specifically, the packet forwarding unit 433 receives a data packet transmitted by the server 25 by using IP, which is an upper protocol than GTP-U. Next, the packet forwarding unit 433 notifies the packet type acquisition unit 431 of the reception of the data packet or the data packet.

In addition, the packet forwarding unit 433 forwards the packet (the forwarding packet) including the packet type information set by the packet type setting unit 432 to the relay apparatus 44. More specifically, the packet forwarding unit 433 forwards the packet to the relay apparatus 44 by using at least GTP-U, which is a lower protocol than IP used to receive the data packet, and UDP/IP, which is a lower protocol than GTP-U. In addition, the packet forwarding unit 433 can perform encapsulation and decapsulation of the received packet. For example, the packet forwarding unit 433 encapsulates and decapsulates a TCP/upper IP packet by using GTP-U. However, the encapsulation and decapsulation method is not limited to such example. Other existing encapsulation and decapsulation methods may be used.

Fig. 15 is a block diagram illustrating a configuration example of the relay apparatus 44 according to the present exemplary embodiment. In Fig. 15, the relay apparatus 44 includes a packet type extraction unit 441, a buffer control unit 442, and a packet forwarding unit 443. Among the function blocks included in the relay apparatus 44, Fig. 15 illustrates only a few of the constituent elements. Namely, the relay apparatus 44 includes a function block(s) (not illustrated) for causing the relay apparatus 44 to function as a relay apparatus. As in other exemplary embodiments, the relay apparatus 44 according to the present exemplary embodiment may be a radio base station or an S-GW.

The packet type extraction unit 441 extracts the packet type information set in the data packet received from the gateway apparatus 43. More specifically, when the packet forwarding unit 443 decapsulates the data packet received by using GTP-U and UDP/IP, the packet type extraction unit 441 checks whether packet type information is set in the header in GTP-U, etc. by which the data packet is encapsulated. If the packet type information is set, the packet type extraction unit 441 extracts the packet type information and notifies the buffer control unit 442 of the packet type information.

Based on the packet type information extracted by the packet type extraction unit 441, the buffer control unit 442 controls a buffer included in the relay apparatus 44. Next, an example of the buffer control will be described assuming that the relay apparatus 44 is a radio base station and the buffer is a PDCP buffer. In this buffer control, the accumulation order of packets accumulated in the PDCP buffer is changed. In addition, as described above, information indicating whether the corresponding packet is a retransmitted TCP packet will be used as an example of the packet type information.

When a radio base station serving as the relay apparatus 44 receives a data packet (a TCP packet) from the gateway apparatus 43 by using GTP-U and UDP/IP, the radio base station relays the TCP packet, together with the corresponding packet type information and GTP-U SN extracted by the packet type extraction unit 441, from the GTP-U layer to the PDCP layer (Fig. 17). Next, the radio base station serving as the relay apparatus 44 allocates a PDCP SN and a PDCP header to the TCP packet (encapsulates the TCP packet) in the PDCP layer and accumulates the TCP packet(s) in the PDCP buffer. More specifically, after the TCP packet is encapsulated with a network layer protocol (for example, IP), the TCP packet is encapsulated (encapsulated into a PDCP packet) in the PDCP layer and accumulated in the PDCP buffer. Hereinafter, for convenience of the description of the present exemplary embodiment, description of the encapsulation in the network layer protocol will be omitted as needed when a PDCP packet is described as a packet obtained by encapsulating a TCP packet.

Next, based on the packet type information extracted by the packet type extraction unit 441, the buffer control unit 442 changes the SNs of the PDCP packets accumulated in the buffer so that, among the PDCP packets (in which the TCP packets are encapsulated) in the buffer, the PDCP SN of the PDCP packet in which a retransmitted TCP packet is encapsulated is assigned a smaller number.

Since the PDCP packets accumulated in the PDCP buffer are transmitted in the ascending order of the PDCP SNs, by performing this buffer control, the PDCP packet in which a retransmitted TCP packet is encapsulated can be transmitted from the PDCP buffer more quickly than the other PDCP packets.

The present exemplary embodiment has been described by using an example in which TCP packets that have arrived at the PDCP layer are given PDCP SNs and PDCP headers (encapsulated into PDCP packets) and are next accumulated in the PDCP buffer as PDCP packets. However, the present exemplary embodiment is not limited to such example. For example, packets of an upper layer than PDCP (for example, IP packets) may directly be accumulated in the PDCP buffer. In such case, when these packets are transmitted from the PDCP buffer, these packets are given PDCP SNs and PDCP headers and are next transmitted as PDCP packets. What type of packet needs to be accumulated in the PDCP buffer (the protocol in which the relevant packets need to be accumulated) and the order of the allocation of PDCP SNs and PDCP headers depend on the implementation.

Namely, the buffer control according to the present exemplary embodiment may be performed on packets (for example, IP packets) that are accumulated in the PDCP buffer and that are upper layer packets than PDCP. In such case, when an upper layer packet is a retransmitted TCP packet, the buffer control may be performed in such a manner that the retransmitted TCP packet is moved to the first position in the PDCP buffer, for example. In addition, a temporary SN may be allocated in the PDCP buffer, and this temporary SN may be used in the buffer control.

The packet forwarding unit 443 receives the data packet in which the packet type information is set from the gateway apparatus 43 by using at least GTP-U and UDP/IP, which is a lower layer protocol than GTP-U. Next, the packet forwarding unit 443 notifies the packet type extraction unit 441 of the reception of the data packet or the data packet.

In addition, the packet forwarding unit 443 forwards the data packet on which the buffer control has been performed by the buffer control unit 442 to the wireless terminal 26.

The PDCP packet in which the retransmitted TCP packet is encapsulated is transmitted from the PDCP buffer more quickly than the other PDCP packets. Thus, the retransmitted TCP packet is forwarded to the wireless terminal 26 more quickly than the other TCP packets.

### [Operation]

Next, an operation example of the communication system according to the present exemplary embodiment will be described in detail with reference to a sequence diagram in Fig. 16.

Since step S401 is the same as steps S201 and S301 in the second and third exemplary embodiments, description thereof will be omitted.

The wireless terminal 26 transmits a message (a request message) requesting transmission of a data packet to the wireless terminal 26 to the server 25 (step S402).

The server 25 transmits a data packet addressed to the wireless terminal 26 (step S403). More specifically, the server 25 transmits the data packet to the gateway apparatus 43 by using at least the upper IP. In addition, in step S403, the server 25 may transmit the data packet addressed to the wireless terminal 26, based on the simultaneous data packet transmission volume set by the transmission rate control unit 252 in the server 25 illustrated in Fig. 6. In addition, in step S403, the server 25 may set packet type information indicating a type of the corresponding data packet in the corresponding data packet and transmit this data packet addressed to the wireless terminal 26.

The gateway apparatus 43 extracts packet information (in the present exemplary embodiment, a packet identifier or the packet type information) of the data packet received from the server 25 (step S404). Since the method of extracting the packet information has been described above, description thereof will be omitted.

The gateway apparatus 43 sets the packet type information in a forwarding packet in a protocol in a layer different from that of the protocol of the packet received from the server 25 (step S405). More specifically, based on the packet identifier acquired by the packet information extraction unit 431, the gateway apparatus 43 determines the packet type information of the corresponding data packet in which the packet identifier is set. Next, the packet type setting unit 432 sets the packet type information in the header of a data packet that has been encapsulated (a forwarding packet to be forwarded to the relay apparatus 44). Since the method of determining the packet type information based on the corresponding packet identifier and the method of setting the packet type information in the forwarding packet have already been described above, description thereof will be omitted.

The gateway apparatus 43 forwards the packet (the forwarding packet) in which the packet type information is set to the relay apparatus 44 (step S406). More specifically, the gateway apparatus 43 forwards the packet to the relay apparatus 44 by using at least GTP-U, which is a lower protocol than IP used to receive the data packet, and UDP/IP, which is a lower protocol than GTP-U.

The relay apparatus 44 extracts the packet type information set in the data packet received in step S406 (step S407). More specifically, when the relay apparatus 44 decapsulates the data packet received by using GTP-U and UDP/IP, the relay apparatus 44 checks whether packet type information is set in the header in GTP-U, etc. by which the data packet is encapsulated. If packet type information is set, the relay apparatus 44 extracts the packet type information.

Based on the packet type information extracted in step S407, the relay apparatus 44 controls a buffer therein (step S408). Since the example of the buffer control has been described above, description thereof will be omitted.

Next, after the buffer control is performed by the buffer control unit 442, the relay apparatus 44 forwards the data packet to the wireless terminal 26 (step S409). As a result of the buffer control performed in step S408, the PDCP packet in which a retransmitted TCP packet is encapsulated is transmitted from the PDCP buffer more quickly than the other PDCP packets. Namely, the retransmitted TCP packet can be forwarded to the wireless terminal 26 more quickly than the other TCP packets.

### [Advantageous effects]

A gateway apparatus according to the present exemplary embodiment sets packet type information based on information set in a packet transmitted from a server in a forwarding packet to be forwarded to a relay apparatus and transmits the forwarding packet to the relay apparatus. In addition, based on the packet type information, the relay apparatus controls a buffer that accumulates packets in which the packet type information is set. With this buffer control, as described above, predetermined packets such as retransmitted TCP packets are transmitted more quickly than the other packets. As a result, among the packets transmitted by the server, a wireless terminal (a user) can receive the predetermined packets more quickly.

### <Other exemplary embodiments>

While several exemplary embodiments of the present invention have thus been described, the present invention is not limited to the above embodiments.

While, as an example, an individual one of the above exemplary embodiments has been described assuming that the protocol layers between the gateway apparatus and the relay apparatus include at least GTP-U and UDP/IP layers, the combination of GTP-U and UDP/IP can be changed depending on the system configuration. Likewise, while the above description assumes that the protocol layers between the radio base station included in the relay apparatus and the wireless terminal include at least PDCP, RLC, and MAC layers, the combination can be also changed depending on the system configuration.

The above gateway apparatus, relay apparatus, server, and wireless terminal can be realized by hardware, software, or a combination thereof. In addition, the method of controlling the above gateway apparatus, relay apparatus, server, and wireless terminal can also be realized by hardware, software, or a combination thereof. Realizing the above components and methods with software means causing a computer(s) to read and execute a program(s).

The program(s) can be stored in various types of non-transitory computer readable medium and supplied to the computer(s). Examples of the non-transitory computer readable medium include various types of tangible storage medium. Examples of the non-transitory computer readable medium include a magnetic recording medium (for example, a flexible disk, a magnetic tape, and a hard disk drive), a magneto-optical recording medium (for example, a magneto-optical disc), a CD-ROM (Compact Disc-Read Only Memory), a CD-R, a CD-R/W, a DVD-ROM (Digital Versatile Disc-ROM), a DVD-R, a DVD-R/W, and a semiconductor memory (for example, a mask ROM, a PROM (Programmable ROM), an EPROM (Erasable PROM), a flash ROM, and a RAM (Random Access Memory)). In addition, the program(s) can also be stored in various types of transitory computer readable medium and supplied to the computer(s). Examples of the transitory computer readable medium include an electrical signal, an optical signal, and electromagnetic wave. The transitory computer readable medium can supply the program(s) to the computer(s) through a wired communication path such as an electrical wire or an optical fiber or through a wireless communication path.

While several exemplary embodiments of the present invention have thus been described, the present invention is not limited to the above exemplary embodiments. Various modifications or combinations can of course be made without departing from the above-described gist of the present invention.

In addition, the above exemplary embodiments can partially or entirely be described, but not limited to, as follows.
(Note 1)
   A gateway apparatus, which is arranged in a core network in a mobile wireless communication system and is connected to a neighboring network that neighbors the core network as a gateway, the gateway apparatus, comprising:
   extraction means for extracting packet information set in a received packet(s) that has been received from a relay apparatus relaying a packet(s) between the gateway apparatus and a wireless terminal or from a node arranged in the neighboring network;
   setting means for setting, based on the extracted packet information, packet information in a forwarding packet(s) in a protocol(s) in a layer(s) different from a layer(s) of a protocol(s) of the received packet(s) in which the packet information is set; and
   forwarding means for forwarding the forwarding packet(s) to the node arranged in the neighboring network or to the relay apparatus.
(Note 2)
   The gateway apparatus according to note 1,
   wherein the protocol(s) of the received packet(s) received from the relay apparatus is GTP-U (GPRS (General packet radio service) Tunneling Protocol for User Plane) and UDP (User Datagram Protocol)/IP (Internet Protocol) in a lower layer than a layer of the GTP-U, and
   wherein the protocol(s) used to set the packet information in the forwarding packet(s) is IP or TCP (Transmission Control Protocol) in an upper layer than the layer of the GTP-U.
(Note 3)
   The gateway apparatus according to note 1 or 2,
   wherein the protocol(s) used to receive the packet(s) from the node arranged in the neighboring network is the IP and the TCP in an upper layer(s) than the layer of the GTP-U, and
   wherein the protocol(s) used to set the packet information in the forwarding packet(s) is ones used in the GTP-U layer or in the UDP/IP layer, which is a lower layer than the GTP-U layer.
(Note 4)
   The gateway apparatus according to any one of notes 1 to 3, wherein the packet information set in the packet(s) received from the relay apparatus includes information about a packet accumulation amount in a buffer in the relay apparatus.
(Note 5)
   The gateway apparatus according to note 4,
   wherein the protocol(s) of the forwarding packet(s) is the TCP, and
   wherein, when the packet accumulation amount in the buffer in the relay apparatus satisfies a predetermined condition(s), the setting means sets a value of an ECN (Explicit Congestion Notification)-Echo (ECE) bit included in a header of the TCP packet(s) to 1.
(Note 6)
   The gateway apparatus according to any one of notes 1 to 5, wherein the packet information set in the packet(s) received from the relay apparatus includes communication quality information indicating communication quality of a communication channel(s) in a wired or wireless area(s) between the gateway apparatus and the wireless terminal.
(Note 7)
   The gateway apparatus according to note 4 or 6,
   wherein the protocol(s) of the forwarding packet(s) is the TCP, and
   wherein the setting means sets at least one of the information about the packet accumulation amount and the communication quality information in an options field(s) in a header(s) of the TCP packet(s).
(Note 8)
   The gateway apparatus according to any one of notes 1 to 7, wherein the forwarding packet(s) is a packet(s) obtained by encapsulating or decapsulating the received packet(s).
(Note 9)
   The gateway apparatus according to any one of notes 1 to 3, wherein the packet information set in the forwarding packet(s) to be forwarded to the relay apparatus is packet type information indicating a type of an individual packet.
(Note 10)
   The gateway apparatus according to note 9,
   wherein the protocol(s) of the forwarding packet(s) is ones used in an IP layer lower than the GTP-U layer, and
   wherein the setting means sets the packet type information in a predetermined area(s) in a header(s) of an IP packet(s) in a lower IP layer.
(Note 11)
   A method of controlling a gateway apparatus, which is arranged in a core network in a mobile wireless communication system and is connected to a neighboring network that neighbors the core network as a gateway, the method, comprising:
   extracting packet information set in a received packet(s) that has been received from a relay apparatus relaying a packet(s) between the gateway apparatus and a wireless terminal or from a node arranged in the neighboring network;
   setting, based on the extracted packet information, packet information in a forwarding packet(s) in a protocol(s) in a layer(s) different from a layer(s) of a protocol(s) of the received packet(s); and
   forwarding the forwarding packet(s) to the node arranged in the neighboring network or to the relay apparatus.
(Note 12)
   A program, causing a computer in a gateway apparatus arranged in a core network in a mobile wireless communication system and is connected to a different network other than the core network as a gateway, to perform processing of:
   extracting first information set in a first packet(s) that has been received from a relay apparatus relaying a packet(s) between the gateway apparatus and a wireless terminal or from a node arranged in the different network;
   setting, based on the first information, second information in a second packet(s) in a protocol(s) in a layer(s) different from a layer(s) of a protocol(s) of the first packet(s); and
   forwarding the second packet(s) in which the second information is set to the node or to the relay apparatus.

### [REFERENCE SIGNS LIST]

1 core network
2 neighboring network
3, 23, 33, 43 gateway apparatus
131 packet information extraction unit
132 packet information setting unit
133, 233, 333, 433 packet forwarding unit
231 congestion information extraction unit
232 congestion information setting unit
331 radio quality information extraction unit
332 radio quality information setting unit
431 packet information extraction unit
432 packet type setting unit
4, 24, 34, 44relay apparatus
241 congestion detection unit
242 congestion information setting unit
243, 343, 443 packet forwarding unit
341 radio quality acquisition unit
342 radio quality information setting unit
441 packet type extraction unit
442 buffer control unit
5 packet transmission apparatus
25 server
251 packet transmission and reception unit
252 transmission rate control unit
6 wireless terminal
26 wireless terminal
261 packet transmission and reception unit
262 data configuration unit

## Claims

1. A gateway apparatus, which is arranged in a core network in a mobile wireless communication system and is connected to a different network other than the core network as a gateway, the gateway apparatus, comprising:
extraction means for extracting, from a first packet(s), first information set in the first packet(s) that has been received from a relay apparatus relaying a packet(s) between the gateway apparatus and a wireless terminal or from a node arranged in the different network;
setting means for setting, based on the first information, second information in a second packet(s) in a protocol(s) in a layer(s) different from a layer(s) of a protocol(s) of the first packet(s); and
forwarding means for forwarding the second packet(s) in which the second information is set to the node or to the relay apparatus.

2. The gateway apparatus according to claim 1,
wherein the protocol(s) of the first packet(s) received from the relay apparatus is GTP-U (GPRS (General packet radio service) Tunneling Protocol for User Plane) and UDP (User Datagram Protocol)/IP (Internet Protocol) in a lower layer than a layer of the GTP-U, and
wherein the protocol(s) used by the setting means to set the second information in the second packet(s) is IP or TCP (Transmission Control Protocol) in an upper layer than the layer of the GTP-U.

3. The gateway apparatus according to claim 1 or 2,
wherein the protocol(s) used to receive the first packet(s) from the node is the IP and the TCP in upper layers than the layer of the GTP-U, and
wherein the protocol(s) used by the setting means to set the second information in the second packet(s) is ones used in the GTP-U layer or in the UDP/IP layer, which is a lower layer than the GTP-U layer.

4. The gateway apparatus according to any one of claims 1 to 3, wherein the first information set in the first packet(s) received from the relay apparatus includes information about a packet accumulation amount in a buffer in the relay apparatus.

5. The gateway apparatus according to claim 4,
wherein the protocol(s) of the second packet(s) is the TCP, and
wherein, when the packet accumulation amount satisfies a predetermined condition(s), the setting means sets a value of an ECN (Explicit Congestion Notification)-Echo (ECE) bit included in a header of the second packet(s) to 1.

6. The gateway apparatus according to any one of claims 1 to 5, wherein the first information set in the first packet(s) received from the relay apparatus includes communication quality information indicating communication quality of a communication channel(s) in a wired or wireless interval between the gateway apparatus and the wireless terminal.

7. The gateway apparatus according to claim 4 or 6,
wherein the protocol(s) of the second packet(s) is the TCP, and
wherein the setting means sets at least one of the information about the packet accumulation amount and the communication quality information in an options field(s) in a header(s) of the second packet(s).

8. The gateway apparatus according to any one of claims 1 to 3, wherein the second information set by the setting means in the second packet(s) to be forwarded to the relay apparatus is packet type information indicating a type of an individual packet.

9. The gateway apparatus according to claim 8,
wherein the protocol(s) of the second packet(s) is ones used in an IP layer lower than the GTP-U layer, and
wherein the setting means sets the packet type information in a predetermined area(s) in a header(s) of the second packet(s).

10. A method of controlling a gateway apparatus which is arranged in a core network in a mobile wireless communication system and is connected to a different network other than the core network as a gateway, the method, comprising steps of:
extracting first information set in a first packet(s) that has been received from a relay apparatus relaying a packet(s) between the gateway apparatus and a wireless terminal or from a node arranged in the different network;
setting, based on the first information, second information in a second packet(s) in a protocol(s) in a layer(s) different from a layer(s) of a protocol(s) of the first packet(s); and
forwarding the second packet(s) in which the second information is set to the node or to the relay apparatus.

## Amended claims

### Amended claims under Art. 19.1 PCT

**1.** A gateway apparatus, which is arranged in a core network in a mobile wireless communication system and is connected to a different network other than the core network as a gateway, the gateway apparatus, comprising:
extraction means for extracting, from a first packet(s), first information set in the first packet(s) that has been received from a relay apparatus relaying a packet(s) between the gateway apparatus and a wireless terminal or from a node arranged in the different network ;
setting means for setting, based on the first information, second information in a second packet(s) in a protocol(s) in a layer(s) different from a layer(s) of a protocol(s) of the first packet(s); and
forwarding means for forwarding the second packet(s) in which the second information is set to the node or to the relay apparatus.

**2.** (Amended) The gateway apparatus according to claim 1,
wherein the protocol(s) of the first packet(s) received from the relay apparatus is GTP-U (GPRS (General packet radio service) Tunneling Protocol for User Plane) and a protocol(s) in a lower layer(s) than a layer of the GTP-U, and
wherein the protocol(s) used by the setting means to set the second information in the second packet(s) is a protocol(s) in an upper layer(s) than the layer of the GTP-U.

**3.** (Amended) The gateway apparatus according to claim 1 or 2,
wherein the protocol(s) used to receive the first packet(s) from the node is a protocol(s) in an upper layer(s) than the layer of the GTP-U, and
wherein the protocol(s) used by the setting means to set the second information in the second packet(s) is ones used in the GTP-U layer or a protocol(s) in a layer(s) lower than the GTP-U layer.

**4.** The gateway apparatus according to any one of claims 1 to 3, wherein the first information set in the first packet(s) received from the relay apparatus includes information about a packet accumulation amount in a buffer in the relay apparatus.

**5.** (Amended) The gateway apparatus according to claim 4,
wherein the protocol(s) of the second packet(s) is the TCP (Transmission Control Protocol), and
wherein, when the packet accumulation amount satisfies a predetermined condition(s), the setting means sets a value of an ECN (Explicit Congestion Notification)-Echo (ECE) bit included in a header of the second packet(s) to 1.

**6.** The gateway apparatus according to any one of claims 1 to 5, wherein the first information set in the first packet(s) received from the relay apparatus includes communication quality information indicating communication quality of a communication channel(s) in a wired or wireless interval between the gateway apparatus and the wireless terminal.

**7.** The gateway apparatus according to claim 4 or 6,
wherein the protocol(s) of the second packet(s) is the TCP, and wherein the setting means sets at least one of the information about the packet accumulation amount and the communication quality information in an options field(s) in a header(s) of the second packet(s).

**8.** The gateway apparatus according to any one of claims 1 to 3, wherein the second information set by the setting means in the second packet(s) to be forwarded to the relay apparatus is packet type information indicating a type of an individual packet.

**9.** (Amended) The gateway apparatus according to claim 8,
wherein the protocol(s) of the second packet(s) is ones used in an IP (Internet Protocol) layer lower than the GTP-U layer, and
wherein the setting means sets the packet type information in a predetermined area(s) in a header(s) of the second packet(s).

**10.** A method of controlling a gateway apparatus which is arranged in a core network in a mobile wireless communication system and is connected to a different network other than the core network as a gateway, the method, comprising steps of:
extracting first information set in a first packet(s) that has been received from a relay apparatus relaying a packet(s) between the gateway apparatus and a wireless terminal or from a node arranged in the different network;
setting, based on the first information, second information in a second packet(s) in a protocol(s) in a layer(s) different from a layer(s) of a protocol(s) of the first packet(s); and
forwarding the second packet(s) in which the second information is set to the node or to the relay apparatus.

Statement under Art. 19.1 PCT

The applicant amended "UDP (User Datagram Protocol)/IP (Internet Protocol) in a lower layer than a layer of the GTP-U" in claim 2 to "a protocol(s) in a lower layer(s) than a layer of the GTP-U."
   In addition, the applicant amended "IP or TCP (Transmission Control Protocol) in an upper layer than the layer of the GTP-U" in claim 2 to "a protocol(s) in an upper layer(s) than the layer of the GTP-U."
The applicant amended "the IP and the TCP in upper layers than the layer of the GTP-U" in claim 3 to "a protocol(s) in an upper layer(s) than the layer of the GTP-U."
   In addition, the applicant amended "in the UDP/IP layer, which is a lower layer than the GTP-U layer" in claim 3 to "a protocol(s) in a layer(s) lower than the GTP-U layer."
The applicant amended "TCP" in claim 5 to "TCP (Transmission Control Protocol)."
The applicant amended "IP" in claim 9 to "IP (Internet Protocol)."
   It is submitted that the contents of the outstanding amendment are supported by the description of the as-filed description and contains no 'new matter'.
